Europäisches Patentamt

European Patent Office

Office européen des brevets

(19)

(11) **EP 0 443 531 B1**

(12) # EUROPEAN PATENT SPECIFICATION

(45) Date of publication and mention
of the grant of the patent:
**16.09.1998 Bulletin 1998/38**

(51) Int Cl.⁶: **G06F 17/30**

(21) Application number: **91102369.5**

(22) Date of filing: **19.02.1991**

(54) **Graphic data handling method and system**

Verwaltungsverfahren und -system für graphische Daten

Procédé et système de gestion de données graphiques

(84) Designated Contracting States:
**DE FR GB**

(30) Priority: **19.02.1990 JP 36038/90**

(43) Date of publication of application:
**28.08.1991 Bulletin 1991/35**

(73) Proprietors:
- **HITACHI, LTD.**
  **Chiyoda-ku, Tokyo 100 (JP)**
- **HITACHI SEIKO, LTD.**
  **Ebina-Shi, Kanagawa (JP)**

(72) Inventors:
- **Kakumoto, Shigeru**
  **Kodaira-shi, Tokyo (JP)**

- **Kato, Masayasu**
  **Hitachi-shi, Ibaragi (JP)**
- **Otsu, Fumitaka**
  **Funabashi-shi, Chiba (JP)**
- **Watanabe, Kazuo**
  **Isehara-shi, Kanagawa (JP)**

(74) Representative: **Strehl Schübel-Hopf & Partner**
**Maximilianstrasse 54**
**80538 München (DE)**

(56) References cited:
**EP-A- 0 280 795**     **EP-A- 0 306 075**
**DE-A- 3 643 585**     **US-A- 4 803 477**

## Description

Background of the Invention:

The present invention relates to a method and a system wherein graphic data items input into a computer are stored on a memory and searched to seek out certain graphic data. More particularly, it relates to a graphic data searching and storing well suited to quickly search for a figure at any desired position and to efficiently use a memory.

Regarding the search of graphic data, Japanese Patent Application Laid-Open number 59-117077 proposes a method wherein a figure is searched for by the use of two tables. An address data table has addresses of memory areas storing the graphic data. A management table, with respect to each of subspaces obtained by dividing a coordinate space covering all the graphic data into suitable small cells, stores coordinates representative of the subspace held in correspondence with spatial addresses on the address data table storing the addresses of figures passing through the cell.

The prior art technique has had the following problems:

(1) In case of searching for any desired figure, the management table hierarcally classified into several stages needs to be referred to. This forms an obstacle to heightening the speed of graphic processing.

(2) For the purpose of making this method effective, the figures contained in the cells must lie in regular order in the address data table. Accordingly, when a figure is added or deleted, it is necessary to sort address data items and to rearrange them so that the figures contained in the cells may lie in regular order.

(3) The method does not have the function of selectively searching lines constituting the figures, the end points and node points of the lines, etc. Therefore, in a case where only the points of designated positions on the lines are to be searched, by way of example, it is required to first search all prospective figures and to subsequently extract the desired points. The requirement renders the efficiency of the search inferior.

US-A-4,803,477 discloses a method with the features of the first part of claim 1 and a system with the features of the first part of claim 21. This document discloses a table structure for managing graphic data items which are related to cells of a graphic image wherein the data graphic items are stored in a segment table which is accessed indirectly via an index table. Moreover, the segment numbers of the graphic data items have to be registered in all the cells which correspond to these graphic items causing a large table size.

From EP-A-0,306,075 a graphic data managing system is known wherein a multi-dimensional coordinate space is divided in a plurality of subspaces to store tree-structured data items, wherein graphic data items are searched on the basis of these tree-structured data items.

From EP-A-0,280,795 a data managing method is known in which a large volume data is divided into a lot of small volume data items which are stored in an external storage device.

## SUMMARY OF THE INVENTION

It is the object of the present invention to provide an efficient method for searching and storing graphic data and an apparatus using such a method.

This object is met by a method according to claim 1 and a system according to claim 21. Preferred embodiments are disclosed in the subclaims.

According to the present invention, addresses of memory storing graphic data are stored in an address data table described by a multidimensional array held in correspondence with positional coordinates, and that the unused memory spaces of the address data table are indirectly utilized for unassigned coordinates, thereby to enhance the efficiency of use of a memory. Besides, in case of searching (i) end points and (ii) node points of lines constituting graphic data, (iii) other points on the lines, (iv) points constituting a surface, and (v) relevant attribute information, only addressed storing of the graphic data or attribute information which fulfills the condition to be dealt with in the address data table are searched. Figure discriminators corresponding to the respective items are cojointly stored in the address data table, whereby an efficient search for figures or the attribute information is achieved.

According to the present invention, in correspondence with the graphic data having a spatial extent, there is the address data table configured of arrays, the dimension of which are not smaller in number than the dimensions of the extent of the graphic data. Coordinate transformation is performed between the graphic data and the address data table, whereby any desired point on each figure can be brought into correspondence with one array number of the address data table. Those memory addresses, of a graphic data table at which the individual graphic data items are sorted, are subsequently stored in the address data table. In case of searching for graphic data located at any desired position, the corresponding array number of the address data table is obtained on the basis of the position, whereupon the desired figure can be searched for through that memory address to the graphic data which is stored. In a case where the memory space of the address data table corresponding to any desired one of cells (each of which is a subspace of a graphic space) is full, relevant information of indirectly utilizing a memory space assigned to another of the cells is substitutionally stored in the address data table, cojointly with the memory address of the graphic data table storing the corresponding graphic data so that the address data table can be used efficiently. When the figure discriminators of the graphic data are stored in the address data, lines or points, the relevant attribute information items, or the like can be extracted selectively and efficiently by deciding the figure discriminators on the searching operation.

BRIEF DESCRIPTION OF THE DRAWINGS

Further objects, features and advantages of the present invention will become more clear upon the following detailed description of preferred embodiments as shown in the drawing, wherein:

Figs. 1(a)-(g) are diagrams showing the formats of a graphic data table, an address data table, an attribute information table, etc. in Embodiment 1:
Figs. (2a) and (b) are diagrams showing the formats of an address data table, etc. in Embodiment 2;
Fig. 3 is a diagram showing hardware architecture;
Figs. 4 (a) and (b) show a flowchart showing graphic data storing program;
Figs. 5 (a) and (b) are diagrams showing the method of T-shaped connection processing;
Fig. 6 is a flow chart showing a graphic data searching program;
Figs. 7(a) through 7(e) are diagrams showing the arrangements of address data items in the case where an overflow has occurred;
Fig. 8 is useful for explaining the parent invention, of which the present invention is a combination in the part;
Fig. 9 is a graph concerning the address table size;
Fig. 10 is a graph concerning the cell size;
Fig. 11 shows an example of the number of pointers for a map; and
Figs. 12 (a) to (c) are examples of figure data storage.

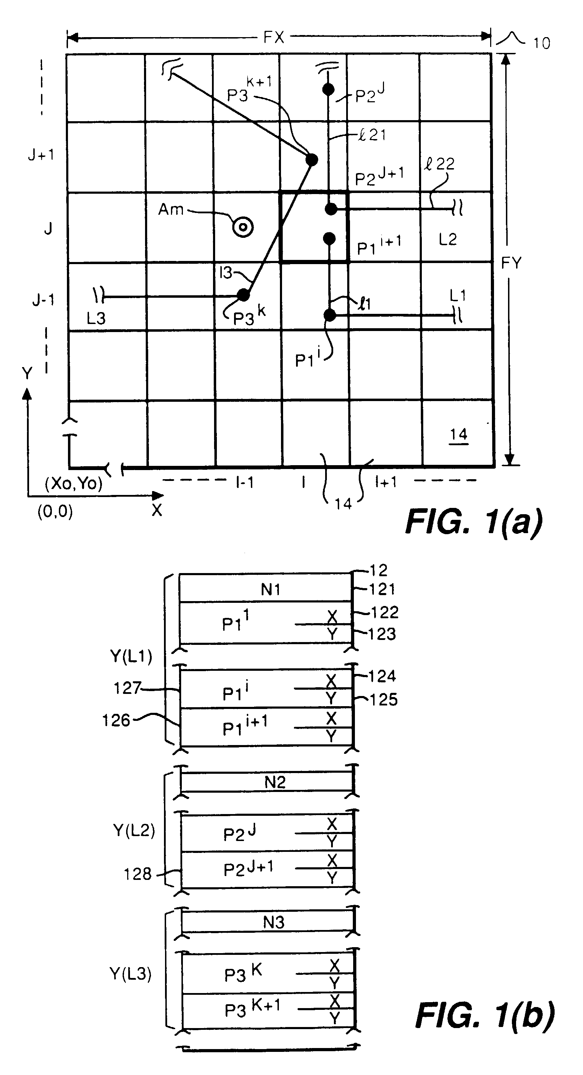

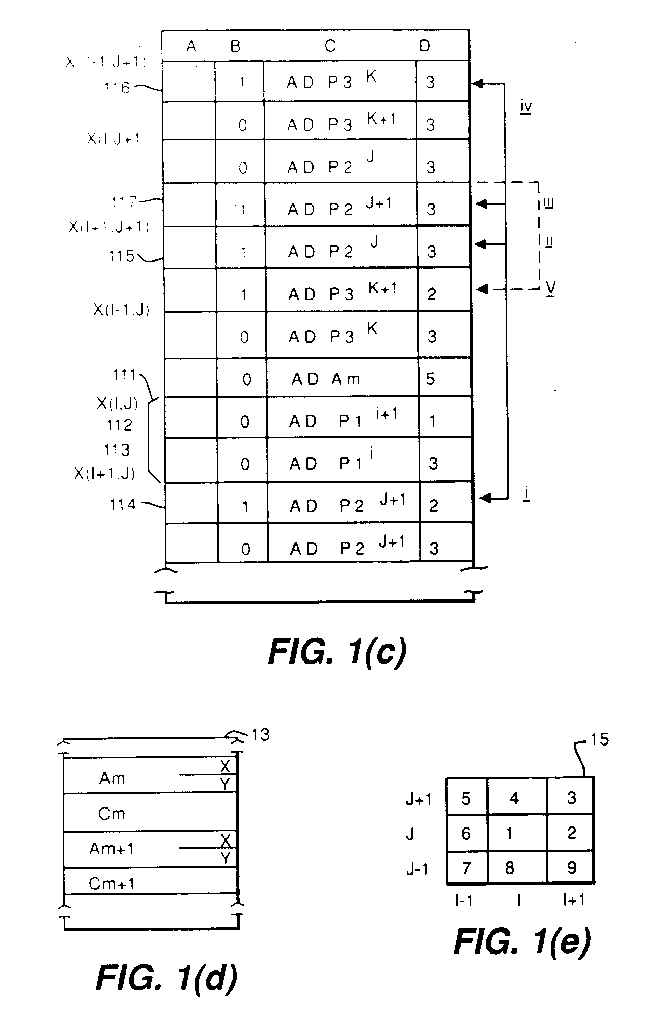

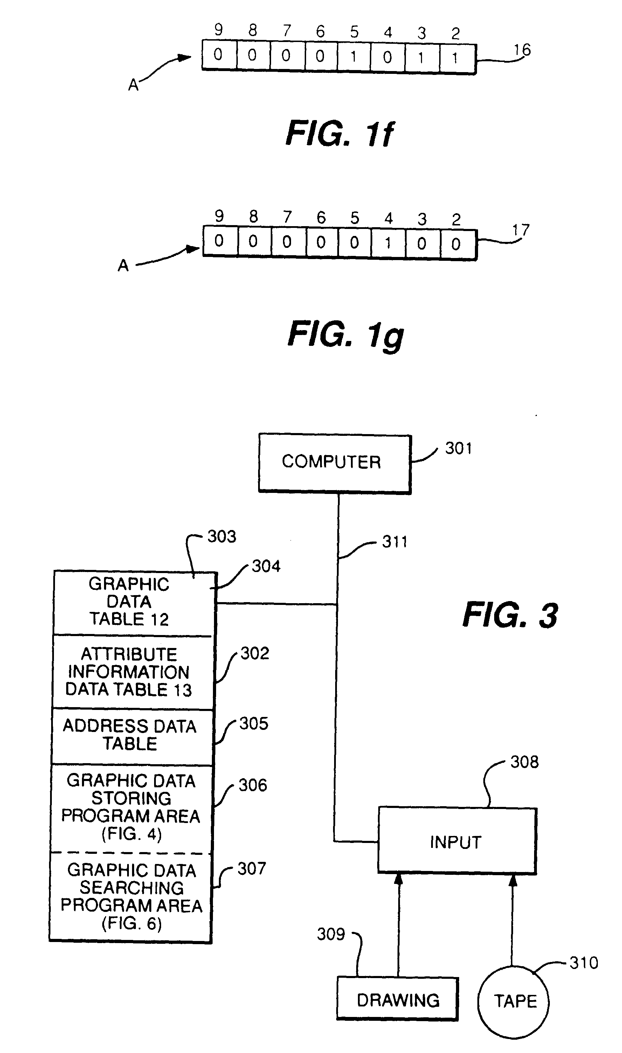

Storing graphic data according to the present invention will be described with references to Fig. 1.

First, there are shown examples of a graphic data table 12 for storing the graphic data and an attribute information table 13 for storing attribute information, respectively in Figs. 1(b) and 1(d). In the graphic data table 12, Nm denotes the number of points (graphic data items) constituting the m-th figure, symbol $P_m{}^n$ denotes the n-th point (graphic data item) constituting a part of the m-th figure, and letters X and Y written at the right of the symbol $P_m{}^n$ denote the X-coordinate and Y-coordinate values of the point $P_m{}^n$, respectively.

In the attribute information data table 13, Am denotes the m-th attribute information, letters X and Y written at the right of Am denote the X-coordinate and Y-coordinate values of the attribute information, respectively, and symbol $C_m$ denotes the content of the attribute information. The attribute information items are stored in relation to X- and Y-coordinates on the drawing, By way of example, the attribute information items are coordinates on a map at which the symbol of a temple lies and the name of the temple, which is the content of the attribute information. In this embodiment, memory addresses of the graphic data table and the attribute information data table, concerning such digitized two-dimensional linear figures and attribute information items, are registered in address data table 11 of Fig. 1(c).

In Fig. 1(a) there is shown a space 10 where figures l1, l3, l21, l22 depicted on the drawing exist. The drawing has a two-dimensional extent, in which (0,0) indicates on Fig. 1 that the lower left hand corner is taken as the origin, and X- and Y-directions are determined as indicated. The coordinate space 10 which covers the figures, is equally divided in the respective directions X and Y into subspaces 14 called "cells". In the address data table 11 of Fig. 1(c), fixed location memory spaces 111 are each of fixed capacity and are held in correspondence with the respective cells 14. Each cell 14 on the drawing is identified by its coordinates (I,J), while the starting address of the fixed-capacity memory space of the address data table 11 corresponding to each cell is expresses as X(I,J), which is a function of the drawing coordinates of the respective cells. The fixed capacity memory space 111 at X(I,J) corresponding to the cell (I, J) is subdivided in a fixed number DP, and the subdivided spaces can be considered as arrays. The number DP is the number of graphic data storing addresses which can be registered in the memory spaces X(I,J) corresponding the the cell (I,J). When the K-th one of the storing addresses has address data, it is expressed as X (I, J,K). DP=2 is set for each cell in this embodiment. In correspondence with the cell (I,J), the fixed-capacity memory space 111 at X(I,J) is subdivided in two (DP=2) memory subspaces 112 and 113. The head addresses of the memory subspaces 112 and 113 are computed using the values of I,J, and K.

In a case where the storing addresses of all of the graphic data items, attribute information items, etc. passing through the cell (I,J) cannot be stored in the memory space at X(I,J) corresponding to this cell, some of them are substitutionally stored in the memory spaces corresponding to the cells nearby. To this end, each memory subspace at X(I,J,K) stores therein a substitution discriminator A for indicating that substitutional address data is stored and an inclusion-exclusion discriminator B for distinguishing whether the stored address data is one of another cell. Besides the substitution discriminator A and the inclusion-exclusion discriminator B, each memory subspace at X(I,J,K) registers there in address data C for indicating the head address of that space in the graphic data table 12 or the attribute information table 13 in which the graphic data, the attribute information or the like is stored, and registers therein a figure discriminator D for indicating the features of the graphic data, the attribute information or the like. The substitution discriminators A are registered for the respective memory subspaces at X(I,J,K) corresponding the the individual cells (I,J). Therefore, when the substitution discriminator A registered in the K-th memory subspace at X(I,J,K) is used in association with, for example, the K-th memory subspace at X(I+1, J,K) within a memory space X(I+1, J) corresponding to another cell, the head address of the memory subspace X(I+1, J, K) for the substitutional storage can be computed on the basis of the substitution discriminator A and the array number K. Thus, high speed data search becomes possible. Each substitution discriminator A consists of, for example, 8 bits of code, shown in Fig. 1(f) and (g) which are arrayed for the eight cells 2-9 adjoining the pertinent cell 1 of Fig. 1(e).

Accordingly to the cell substitution discriminator numbers 16 and 17 have bit locations in the bit table of Figs. 1(f) and (g) respectively set in correspondence with the positional relations of the eight cells 2-9 relative to the pertinent cell 1 in Fig. 1(e). This substitute discriminator sets a flag of "1" to indicate the substitutional storage. When the bit is "0", it indicates that the memory space of the corresponding adjacent cell is presently unused and capable of the substitution storage.

In the storing operation when the subspace of the pertinent cell is full, the bit value of "0" is sought in the train of bits of the substitution discriminator A in the memory subspace of the adjacent cell corresponding to the found "0" bit of the array number K corresponding to the pertinent cell. When the substitutional memory subspace of an adjacent cell has an empty area as indicated by a "0" in the bit map A, the address data is substitutionally stored therein and the flag of "1" is set at the corresponding bit of the substitution discriminator A. When the substitutable memory subspace has no empty area, the flag is left intact at "0", and the next prospective memory subspace with a flag of "0" is examined for the pertinent cell.

On the other hand, in the read searching operation, only the substitutable memory subspace in which the flag of "1" is set is selected from among the train of bits of the substitution discriminator A, and the head address thereof is found on the basis of the values I, J and K.

The inclusion-exclusion discriminator B in Figure 1 (a) sets "0" as an initial value, and "1" is set when the address data of another cell (other than the pertinent cell) has been stored in a subspace of the pertinent cell where information is being read or written. Thus, in reading out the address data which concerns the pertinent cell (I, J), only the memory subspace whose value B is to "0" is selected to be read, whereby the confusion of the address data of the pertinent cell with that of another cell can be avoided.

Although the example 15 of Fig. 1(e) has eight adjoining cells (2,3,4,5,6,7,8,9) set as the substitutional memory spaces for the referenced pertinent cell (1), the substitutional memory spaces are not restricted to the eight adjoining cells. Bit tables 16 and 17 of Figs. 1(f) and (g) are two examples of substitution discriminators A respectively registered in the memory subspaces 112 and 113 corresponding the pertinent cell (I,J) (cell of Fig. 1(e)). In Fig. 1(f) the substitution discriminator A of the memory subspace 112 at X(I,J, 1) of array number K=1 indicates that the cells at a relative position 2 of the cell (I+1,J), at a relative position 3 of Fig. 1(e) (cell (I+1, J+1)) and a relative position 5 of Fig. 1(e) (cell (I-1, J+1)) have the substitutable memory subspaces, wherein the bits corresponding to relative position cells 2,3, 5 are set with "1" and the bits corresponding to relative position cells 4,6,7,8,9 are not set, that is, "0". The substitution discriminator A shown in the bit table 17 of Fig. 1(g) of the memory subspace 113 at X(I,J,2) of array number K=2 has only a bit for the adjacent cell at a relative position 4 (cell (I,J+1) set with "1" to indicate the substitutable memory subspace.

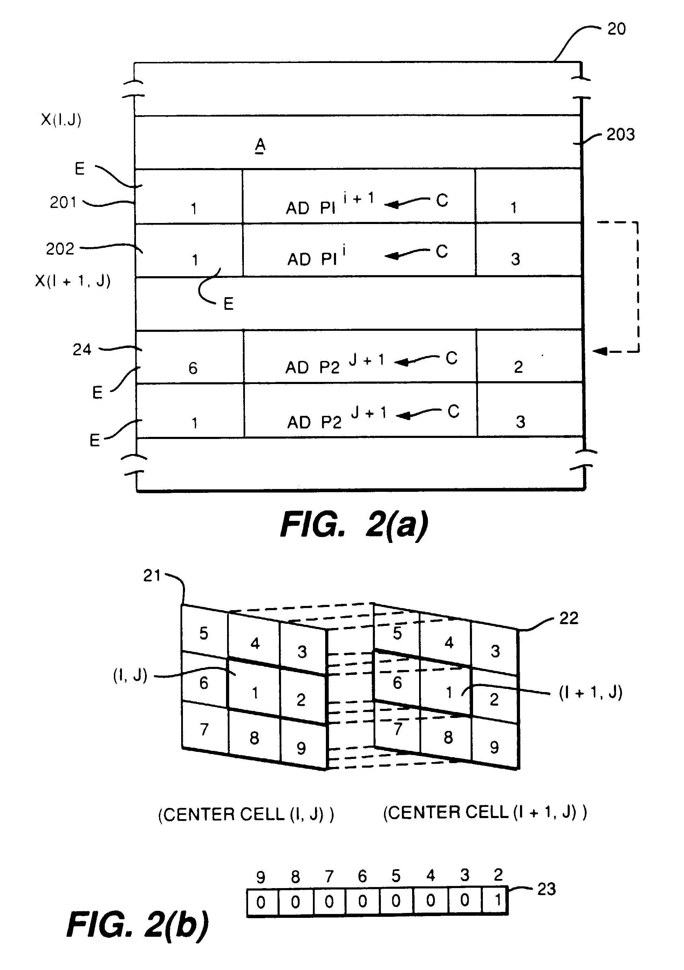

As stated for the first embodiment, the substitution discriminators A are registered for the respective arrays K within the memory space at X(I,J) in correspondence with each cell (I,J) and they are collectively registered in part of the memory space at X(I,J) corresponding to each cell (I,J). Further, the substitution discriminators A are registered in common in correspondence with the cell without distinguishing them in accordance with the arrays K in the second embodiment, shown in Fig. 2. In an address data table of Fig. 2(a), a memory space at X(I,J) includes two memory spaces 201, 202 and a memory space 203 for storing the substitution discriminator A in correspondence with each cell (I,J). The head address of this memory space at X(I,J) is computed using the values I,J. An owner discriminator E is checked with a substituted memory space in the data read searching operation and is in each of the inclusion-exclusion discriminator B described before.

An example of the owner discriminator E in Fig. 2 (a) is such that, when the address data C is associative with the pertinent cell itself, "1" is registered at the owner discriminator E. When the address data C is associative with the substitutive cell, a train of bits indicating the owner are registered as the owner discriminator E, using the discrimination numbers 15 in Fig. 1(e) as stated before. In searching for address data, the address data of the substituted memory spaces can be properly searched for by finding the correspondence between the cell discrimination number indicated by the substitution discriminator in the memory subspace 203 within the memory space associated with the pertinent cell and the cell discrimination number indicated by the owner discriminator E registered for each of the arrays within the substitution memory subspaces.

As an example with reference to Fig. 2, address space $ADP_2^{J+1}$ cannot be stored in the memory space X(I,J) for the cell (I,J) because of the lack of room and therefore is substitutionally stored in the right adjacent cell (I+1, J), which is cell 2 in Fig. 1(e). Cell discrimination numbers 21 of Fig. 2(b) are centering around the cell (I.J), while cell discrimination numbers 22 are centering around the right adjacent cell (I+1, J). When the cell (I,J) is the pertinent cell, the right adjacent cell (I+1,J) is indicated by owner discrimination number "2". Therefore, the bit train of the substitution discriminator A in sub subspace 203 in the memory space at X(I,J) for the cell (I,J) has "1" set in the bit position of the discrimination number "2". Simultaneously, the owner discriminator E of memory space at X(I+1, J) for the cell (I+1, J) stored therein discrimination number "6", which indicates that the address data stored here is of the left adjacent cell (I,J).

In this embodiment, the eight cells adjoining the pertinent cell at the center are held in correspondence with the cell discrimination numbers as indicated at 21 and 22 in Fig. 2(b). Therefore, when the discrimination number is indicated by the substitution discriminator A is 5 or less, a value obtained by adding 4 thereto becomes the discrimination number indicated by the owner discriminator E, which is registered in correspondence with the array K within the memory space of the substitutional cell, and when the former discrimination number is 6 or greater, a value obtained by subtracting 4 therefrom becomes the latter discrimination number. Using the discrimination number, the address data substantially stored in the memory spaces of the other cell can be searched for. In a case where the address data C is not registered yet, initial values of "0" are set as the substitution discriminator A and the owner discriminator E, and the processing of referring to the address data in the searching operation is omitted.

The searching and storing will now be described in conjunction with Embodiment 1.

Referring back to Fig. 1(a), an example of the figure discriminator D will be explained. "1" denotes an end point, "2" a node point, "3" a point on a line, "4" a point constituting a plane, and "5" a point typical of attribute information. By way of example, in a case where the end point and node point of a figure are to be stored as graphic data, the address data C indicates a memory position on the graphic data table 12, Fig. 1(b), storing the coordinates of the prospective points and the figure discriminator D indicates either the end point "1" or the node point "2" are stored in the subdivided memory space within the address data table 11 of Fig.. 1(c). In a case where the point on the line is to be stored conjointly as graphic data, the address data C which indicates the head address of the memory pace for the graphic data table 12 if Fig. 1(b) storing the coordinates of the start point or end point on the line and the figure discriminator D which indicates the point "3" are stored in the subdivided memory space within the address data table 11 of Fig. 1(c). In a case where the point on the line is to be stored cojointly as graphic data, the address data C, which indicates the head address of the memory space of the graphic data table 12 of Fig. 1(b) storing the coordinates of the start point or end point on the line and the figure discrimination D which indicates the point "3" on the line are stored in the subdivided memory space within the address data table 11. In a case where also the attribute information is to be stored, the address data C which indicates the head address of the corresponding memory space of the attribute data table 13 of Fig. 1(d) storing the coordinates of the attribute information and the figure discriminator D which indicates the attribute information "5" are stored in the subdivided memory space within the address data table 11 of Fig. 1(c).

Further, all figures can be searched in such a way that the head addresses of those memory spaces of the graphic data table 12 which store therein the values $N_m$ indicative of the numbers of points constituting the figures (for example, the head address of the memory spaces 121 of the graphic data table 12 in Fig. 1(b), are additionally registered in the memory subspaces within the address data table 11 of Fig. 1(c).

Next, the operation of the whole construction will be described. By way of example, it is assumed that a linear figure $L_1$, a linear figure $L_2$, and a linear figure $L_3$ and the attribute information Am are drawn within the coordinate space numbered 10 which covers the figures. The drawing is read by a drawing input apparatus 308 to be described later. Then, the X- and Y-coordinates, on the drawing, of each of the end points and node points of the respective linear figures $L_1$, $L_2$, and $L_3$ are stored as graphic data in the graphic data table 12 together with the numbers of constituent points Nm of these figures. The X- and Y-coordinates on the drawing, of the attribute information Am are similarly stored as attribute information data in the attribute table 13 together with the content $C_m$ of this attribute information.

The graphic data table 12 of Fig. 1(b) stores therein the coordinates (X,Y) of the points P constituting the figures and the numbers N of the constituent points. The quantity $N_1$ stored in the space 121 within a space $Y(L_1)$ on the graphic data table 12 denotes the number of polygonal lines on the linear figure $L_1$. Space 122 stores the X-coordinate value of the first point P11 of the linear figure $L_1$, while space 123 stores the Y-coordinate value of the first point P11 of the linear figure $L_1$. The X-coordinate value and Y-coordinate value of the i-th point of the linear figures $L_1$ are respectively stored in space 124 and space 125, and as to all the end points and node points of the linear figure $L_1$, the X- and Y-coordinates thereof are stored in the space $Y(L_1)$.

Likewise, as to the linear figures $L_2$ and $L_3$, the numbers of the polygonal lines thereof and the X- and Y-coordinates of the end points and node points thereof are stored in respective spaces $Y(L_2)$ and $Y(L_3)$.

The address data table 11 stores for each cell the substitution discriminator A, the inclusion-exclusion discriminator B, the head address C of the corresponding space memory within the graphic data table 12, and the figure discriminator D indicating the feature of the figure. X(I,J) denotes that memory space within the address data table 11 which corresponds to the cell (I,J) within the coordinate space 10 covering the figures $L_1$, $L_2$, $L_3$. The size (memory capacity) of this memory space X(I,J) is fixed and it is subdivided by three arrays K. In this manner, the size of the individual memory space 111 of Fig. 1(c) corresponding to each cell 14 of Fig. 1(a) is fixed. Therefore, when the head addresses of the respective memory spaces on the address data table 11 are obtained from the cell number I,J, the head addresses of the memory spaces X(I,J,K), subdivided using the array numbers K, are also determined in succession. Each of the memory subspaces at X(I,J,K) store therein data on the line in the cell (I,J) of information indicative of the substitutional memory address thereof. As described before, each memory subspace is partitioned into the substitution discrimination A which indicates that the address data is substitutionally stored in the substitutional memory space nearby, the inclusion-exclusion discriminator B which serves to distinguish whether the stores data is of the pertinent cell itself or the other cell, the space C in which the address data is registered, and the figure discriminator D which indicates the feature of the figure.

By way of Example, a line 11 of Fig. 1(a) constituting a part of the linear figure $L_1$ passes in the cell (I,J). Therefore, spaces 112, 113 at the head address X(I,J) of the address data table 11 point to the graphic data table 12 that stores therein the X- and Y-coordinates of the start point and end point of the line 11 respectively. Also, there are stored the values of the figure discriminators D expressing the features of the figure, and the values "0" of the inclusion-exclusion discriminators B indicating that the stored address data belongs to the pertinent cell itself. More concretely, the memory subspace 112 stores therein the address data AD $P_1^{i+1}$ indicating the head address of that space 126 within the graphic data table 12 in which the coordinates of the (i+1)th point $P_1^{i+1}$ of the linear figure $L_1$ are stored, the value "1" of the figure discriminator D indicating that the point concerned is the end point, and the value "0" of the inclusion-exclusion discriminator B indicating that the stored address data is of the pertinent cell itself The subspace 113 stores therein the address data $ADP_1^i$ indicating the head address of the space 127 within the graphic data table 12 in which the coordinates of the i-th point $P_1^i$ of the linear figure $L_1$ are stored, the value "3" of the figure discriminator D indicating that the point concerned is the point on the line, and the value "0" of the inclusion-exclusion discriminator B indicating that the stored address data is of the pertinent cell itself. Memory subspace 114 within the memory spaces X(I+1, J) for the right adjacent cell (I+1, J) stores therein the address data $ADP_2^{J+1}$ indicating the head address of that space 128 within the graphic data table 12 in which the coordinates of the (J+1)th point $P_2^{J+1}$ of the linear figure L2 are stored, the value "2" of the figure discriminator D indicating that the point concerned is the node point, and the value "1" of the inclusion-exclusion discriminator B indicating that the stored address data is of the other cell. The substitution discriminator A, 16 of Fig. 1(f), is in the memory subspace 112 of the array 1 within the memory space at X(I,J), and the bit corresponding to the discrimination number "2" is set to "1" in order to indicate that the address data concerning the figure of the cell (I,J) is substitutionally stored in the memory subspace 114 of the array 1 within the memory space at X(I+1, J) for the cell (I+1, J) adjoining at the right as viewed from the pertinent cell and corresponding to the array number "2". Likewise, the address data items concerning the figures of the cell (I,J) are substitutionally stored on a memory subspace 115 within a memory space at X(I+1, J+1) and a memory subspace 116 within a memory space at X(I-1,J+1), so that the substitution discriminator A, 16 of Fig. 1(f) has value "1" stored at the corresponding discrimination numbers "3" and "5". In Fig. 1(g) the substitution discriminator A,17, is registered in the memory subspace 113 of the array 2 within the memory space at X(I,J), and the bit corresponding to the discrimination number "4" is set to "1" to indicate that the address data concerning the figure of the cell (I,J) is substitutionally stored in a memory subspace 117 of the array 2 within a memory space at X(I, J+1) for a cell (I, J+1) overlying the pertinent cell and corresponding to the array number "4".

As described above, the address data items which indicate that memory addresses of the graphic data on the figures passing in the cell (I,J) are first stored in the subspaces 112 and 113 within the memory space corresponding the the pertinent cell, and when these subspaces have become full, the remaining address data items are substitutionally stored in the subspaces 114, 115, 117 and 116 within the memory spaces corresponding the the other cells in succession.

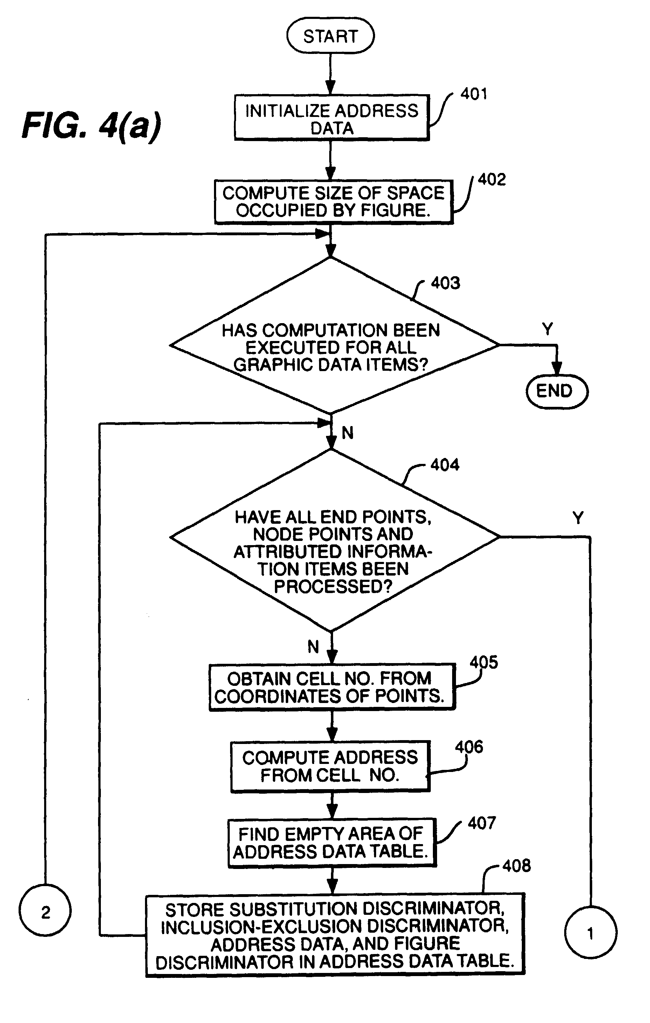

The whole system for performing the method is shown in Fig. 3. The data input apparatus 308 and a memory 303 are connected to a computer 301, including a CPU through a data bus 311. The memory 303 incudes the area 304 of the graphic data table 12 for storing graphic data, the area 302 of the attribute data table 13, the area 305 of the address data table 11 for registering the memory addresses of the graphic data, the area 306 of a graphic data storing program, and the area 307 of a graphic data searching program. It is also possible to realize the respective programs in hardware fashion.

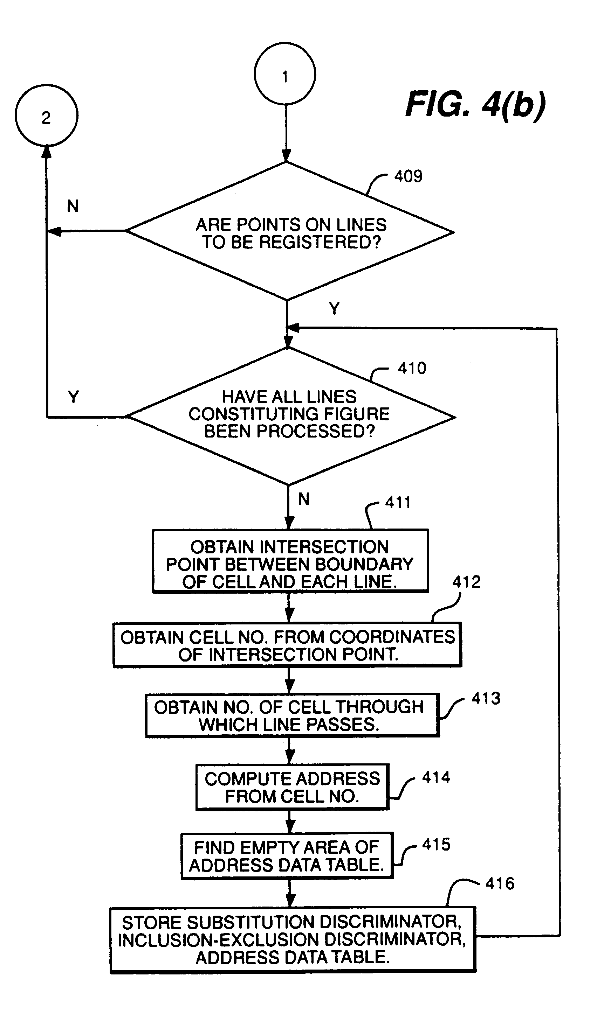

A drawing 309 to be processed is read as graphic data items by the graphic data input unit 308 in accordance with the graphic data storing program of Fig. 4 within the memory area 306, which program is executed by the computer 301. The read graphic data items are stored in the graphic data table 12 within the memory area 304 and the attribute data table 13 within the memory area 302. Further, as stated above, address data items indicating the memory addresses of the graphic data table 12 which store the graphic data items of respective figures therein are stored in the address data table 11 within the memory area 305. As stated before, the graphic data items are items of the coordinates of the end points and node points of polygonal lines. Attribute data items are data indicating the presence of a special library figure, e.g., and data identifying the same for retrieval. The graphic data input apparatus 308 is constructed of e.g. a manual drawing input apparatus with which the graphic data items are manually converted into the coordinate data items, for example a digitizing drafting table, or an automatic drawing input apparatus which reads the coordinate data items automatically, for example a scanner. A magnetic tape apparatus 310 can also input figures generated by another system.

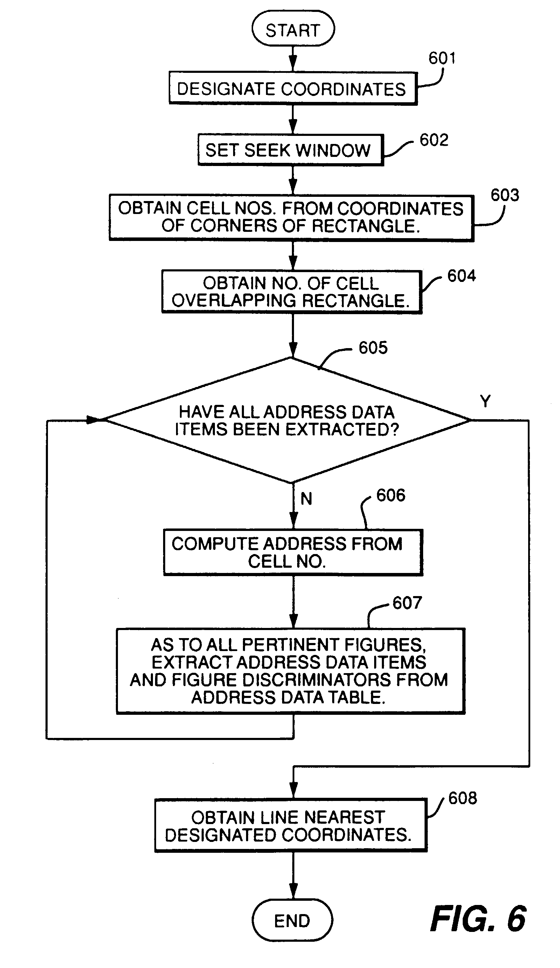

In case of searching the graphic data, the computer 301 executes the graphic data searching program of Fig. 6 within the memory area 307, and the graphic data items stored in the graphic data table 12 of the memory area are fetched with reference to the address data table 11 of the area 305.

The address data table 11 is generated according to the process shown in Fig. 4. First, the entire memory space of the address table 11 is initialized, By way of example, values "0" are substituted for data at each memory location (step 401).

Subsequently, with respect to the input figure of drawing, coordinate values in the respective directions X and Y are compared by referring to all the graphic data items, to find the maximum values and the minimum values, the difference of which are used for obtaining an X-directional length FX and a Y-directional length FY as the overall size of the space required by the figure represented by the graphic data (step 402). The answers to the determinations of steps 403 and 404 are no, since there is data to process. Thereafter, the address data items C indicating those memory addresses of the graphic data table 12 in which the coordinates of the end points and node points of the respective figures of the graphic data are stored, the substitution discriminators A, the inclusion-exclusion discriminators B or the owner discriminators E, and the figure discriminators D are registered in the memory spaces of the address data table 11 with reference to the coordinate values for the end points and node points of the figures. First, the coordinates (X,Y) are transformed into the numbers I.J of the cells containing these coordinates, by the following coordinate transformation formulae (step 405):

$$I=[X \times AX/FX]$$

$$J=[Y \times AY/FY]$$

Here, FX and FY denote the X- and Y-directional lengths of the coordinate space where the figures exist, respectively. AX and AY denote the numbers of division of the coordinate space in the X- and Y-directions, respectively. [ ] is the Gauss symbol, which signifies to take the greatest integer not exceeding a number written therein.

Next, the memory address of the graphic data stored in the graphic data table 12 is registered in the memory space at X(I,J) corresponding the the cell number I,J within the address data table 11. The capacity of the memory space at X(I,J) corresponding to the cell (I,J) is fixed. Since the arrays within the memory space at X(I,J) corresponding to the cell (I,J) are considered as X(I,J,K), the head address ADR of the memory space X(I,J) can be computed (step 406) from:

$$ADR=AY \times DP \times NB \times DP \times J + NB \times (K-1) + FST\$AD$$

Here, DP denotes the number of those memory addresses of the graphic data which can be stored in the memory space at X(I,J) corresponding to the cell (I,J), NB denotes the capacity of the memory space which stores therein the substitution discriminator A, the inclusion-exclusion discriminator B, the address data C and the figure discriminator D as to one memory address of the graphic data, and the symbol FST\$AD denotes the first address of the address data table 11. Assuming:

$$AY=2m, DP=2n \text{ and } NB=21$$

then Eq. (2) can be rewritten as:

$$ADR= I \times 2^{m+n+l} + J \times 2^{n+l} + (k-1) \times 2^{l} - FST\$AD$$

Since the powers of 2 can be computed by shift calculations, they are suited to computer processing.

The head address on the address data table area 305 is computed in accordance with Eq. (2) (step 406).

In a case where data has already been registered in the space of x(I,J,K), empty areas are sought while the array K within the corresponding memory space at X(I,J) is being updated as (I,J,K+1) and (I,J,K+2). When there is no empty area found, substitutable memory spaces are sought on the basis of the substitution discriminator A as described before, and the memory space capable of storing the discriminators etc. is selected (steps 407). The initial value "0" is held in the empty memory space.

The substitution discriminator A, inclusion-exclusion discriminator B, the address data C and figure discriminator D are stored in the particular memory space (step 408). The above precessing is repeated for each of the end points, node points and attribute information by processing from step 408 to step 404 until step 404 indicates that all end points, node points and attribute information items have been processed so that the process proceeds to step 409.

Further, in step 409 it is determined if there are points on lines different from the end points, node points and attribute information to be registered in the address data table 11. If the answer to step 409 is yes then the answer to step 410 is no and then the intersection point between the boundary of a cell and each of the lines constituting a figure is obtained in step 411. Since two boundaries in the vertical direction and in the horizontal direction can be selected as the boundary of the cell, one of them is selected by the following method: First, a circumscribed rectangle having parallel latera in the X-direction and Y-direction is set with its diagonal line being the line within the cell, and the X-directional and Y-directional lengths thereof are respectively denoted by Dx and Dy. Herein if $Dx \geqq DY$ holds, then the cell boundary in the horizontal direction is selected. Then the number (I,J) of the cell including the intersection point between the line and the cell boundary is obtained using Eq. (1) (step 412).

Regarding the end point of the line and the intersection point of the line with the cell boundary, the middle points between them and all adjacent points are found. Subsequently, the numbers of cells including the middle points are obtained in accordance with the boundary of the cell in the horizontal direction intersect at one point, and the numbers of four cells surrounding the point of the intersection are obtained in order to regard the four cells as the cells in which the line passes. Since the numbers of two of the four cells have already been found, the numbers of the other two cells are readily obtained form the relation of adjacency of the cells. These cell numbers are added to the cell numbers obtained at step 412, whereby the numbers of all the cells in which the line passes are obtained (step 413). The cell numbers thus obtained are substituted into Eq. (2) to calculate the head addresses of the address data table 11 (step 414), and the empty areas of the address data table 11 are sought to select a storable memory space (step 415). The substitution discriminator A, the inclusion-exclusion discriminator B, the address data C, and the figure discriminator D indicating the points on the line are stored in the selected memory space (step 416). With this method, the data items are stored in the memory spaces of the address data table 11 corresponding to all the cells in which the line passes.

The above processing is repeated by passing from step 416 to step 410 for all lines constituting the figure. When all lines have been processed by steps 411-416, flow returns to step 403, according to decision step 410.

The operations of storing the substitution discriminators A, inclusion-exclusion discriminators B, address data items C, and figure discriminators D in the address data table 11 are executed as to all graphic data items and attribute information items (step 403). An address data table concerned with only specified information can be generated in such a way that step 403 is additionally endowed with the function of deciding the colors and sizes of figures, or selectively storing only specified prospective data items as only the end points of graphic data, only the end points and node points of graphic data, only points on planes or only associated attribute information items. Besides, the supplementation or deletion of figures can be coped with by the above processing. In the case of deleting figures, however, the substitution discriminators A, inclusion-exclusion discriminators B, address data items C and figure discriminators D are deleted instead of being stored on the memory. It is to be understood that, in the two cases of the supplementation and the deletion, the whole address data table need not be renewed.

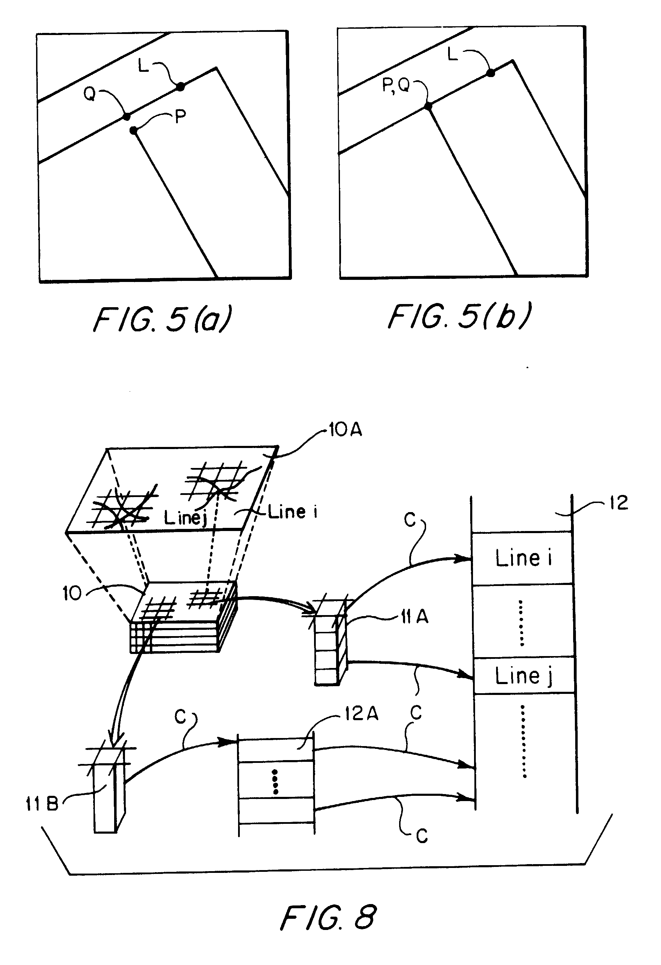

As an example of graphic processing in which the address data table is actually employed, T-shaped connection processing as shown in Figs. 5(a) and (b) will be explained. This processing is one in which the closest line L from an end point P that lies within a designated extent is selected (a line containing the point P is excluded), whereupon the point P is drawn onto the line L. In this processing, the address data table is initially generated as to end points, node points and points on lines. Subsequently the data searching program memory area 307 of the memory 303 in Fig. 3 is executed.

The graphic data searching program is shown in Fig. 6. First, the coordinates of point P are designated (step 601), and a rectangular seek window is set around the point P (step 602). The coordinates of the left lower corner and right upper corner of the seek window are converted to cell numbers in accordance with Eq. (1) (step 603). The number of a cell lying inside the seek window is evaluated with reference to the number of a cell found at the step 603 (step 604) and the address of the address data table corresponding the evaluated cell number is obtained using Eq. (2) (step 606). The array is updated on the basis of the designated address, and as to all corresponding figures, the address data items C and the figure discrimination D are extracted by reference to the substitution discriminators A (step 607). The processing to the steps 606 and 607 is executed for all the cells lying inside the seek window (step 605). From among lines which exist within the coordinate space which covers all such cells, lines which exist in the cells near the pertinent cell as specified by the figure discriminators D and that have the corresponding address are selected on the basis of the addresses and figure discriminators D in the extracted data items, the distances between the group of selected lines and the point P are mathematically evaluated from the respective coordinates thereof and are compared, and the nearest line is selected (step 608). Finally, the intersection point Q between the nearest line and the line containing the point P is obtained, and the coordinates of the point P are changed into those of the point Q.

Further, the method can be applied to the construction of an address data table concerning three-dimensional figures by increasing the dimensions DP of the array (I,J,K).

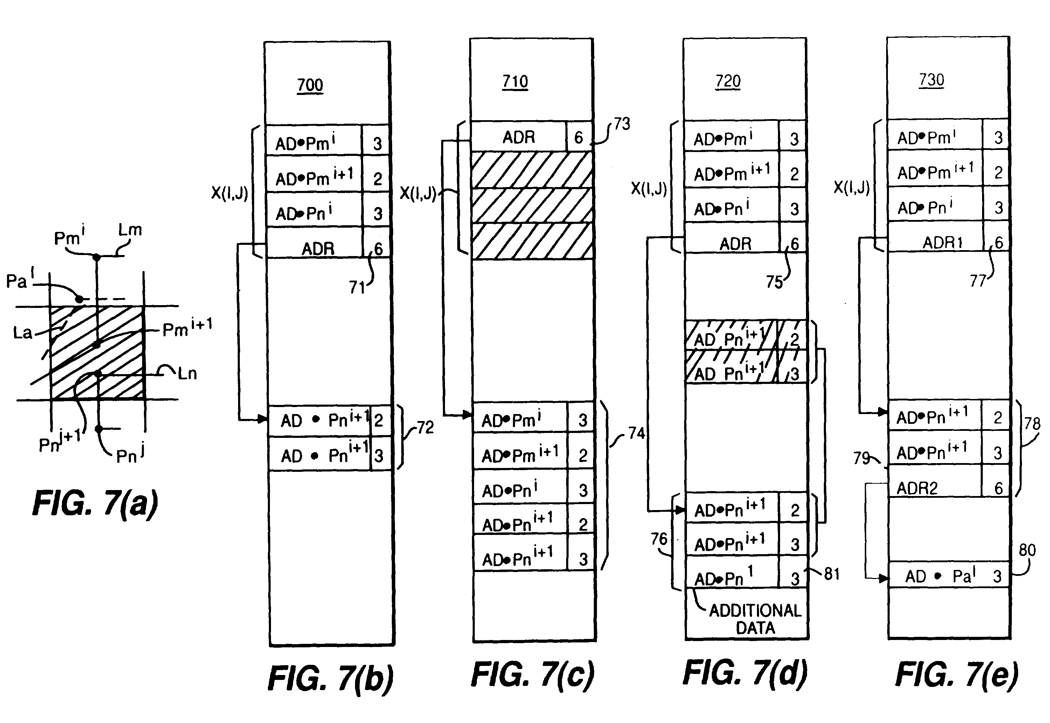

Next, referring to Figs 7(a) through (e), there will be described methods of storing address data in the case where the number of graphic data items is excessively large relative to a fixed memory capacity prepared beforehand and empty memory areas (substitutable memory spaces) are nearby, so all of the address data etc. of the graphic data (including also relevant information etc. for substitutional storage) cannot be stored. Fig. 7 (a) shows figures which pass in a cell (I,J). A linear figure $L_n$ and a linear figure $L_m$ pass in the cell (I,J). Symbol $P_n{}^j$ denotes the j-th point (a point on a line) on the linear figure $L_n$, symbol $P_n{}^{j+1}$ denotes the (j+1)th point (a node point) on the linear figure $L_n$, symbol $P_m{}^i$ denotes the i-th point (a point on a line) on the linear figure $L_m$, and symbol $P_m{}^{i+1}$ denotes the (i+1)th point (a node point) on the linear figure $L_m$.

Besides, a linear figure $L_a$ indicated by broken lines is a linear figure added. Symbol $P_a{}^1$ indicates the first point (a node point) on the linear figure $L_a$.

Fig. 7(b) shows an example storing the address data etc. in an address data table 700 in the case where they cannot be stored at memory space X(I,J) for lack of room. X(I,J) denotes a memory space corresponding to the cell (I,J). Value "6" stored in partial space 71 of the memory space at X(I,J) is a discriminator which indicates overflow of address data which cannot be stored in the space at X(I,J) and which is successfully stored in another memory space 72 pointed to by the address. In another example, shown in address data table 710 in Fig. 7(c), the address and the discriminator "6" indicative of the overflow are stored on the head space 73 of the space at X(I,J), and the address data and new address data are combined and then shifted into another memory space 74 pointed to by the address. By controlling the storage in a memory in this manner, the storage of the present invention can be applied even to a cell in which graphic data items are dense. Further, as shown, an address data table 720 in Fig. 7(d), even when a figure to be added to such a cell is undergoing the overflow, the address data of the figure to be added may well be shifted into another memory space 76 together with the overflowing data, In this case, only the address stored in a space 75 may be stored. Address data stored in a space 81 are the data added. Moreover as shown in an address data table 730 in Fig. 7(e), in the case of storing the address data in another memory space at overflow, another space 78 to form a pair with the address data and pointed to by the address of space 77 is provided. When a new figure is subsequently added, still another space 80 is pointed to using an address stored in partial space 79 within the space 78. In this way, the address data of new figures can be successfully stored. Memory space of the address data table 730 in which no data is stored can be brought into correspondence with the other space 78. On this occasion, a discriminator, which indicates that no data corresponding to the memory space is stored, is stored on the space beforehand.

On maps and design drawings, there is some distance between the lines and polygons that are being described by graphics data. On maps, most lines are 2mm or more apart from each other, except at intersections, and even the closest contour lines are usually 0.5 mm apart. Even on drawings with crowded lines, the area of lines (black area) is no more than about 20 percent of the total area. The ratio is less after lines are thinned.

From those observations, it can be concluded that there will be no sudden increase in the number of overlapping graphics forms if graphics data are reduced no more than a particular proportion.

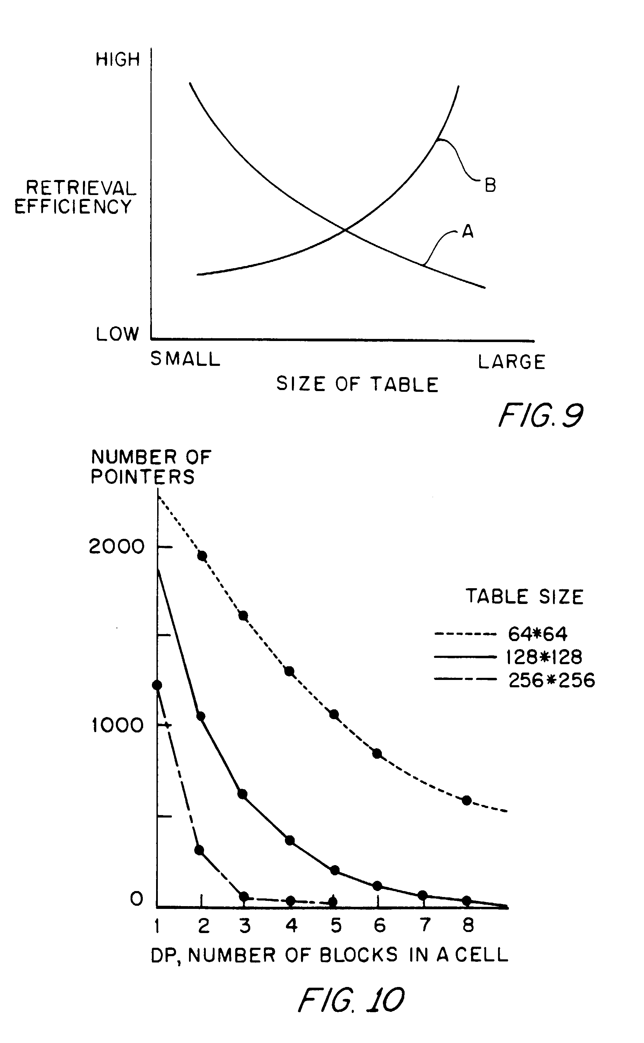

The method, devised from these observations, is based on the principles illustrated in the example of the two-dimensional data in Figure 8. The figure shows the relation among the original figure 10A and data representations of it. Vector graphics are represented by X and Y coordinates (and Z for three dimensions) and stored in a predetermined format in the graphics data table 12. The address in memory where data for each line are stored can then be identified by a pointer.

The features of this system are as follows.

(1) Two-dimensional graphics data 12 are linked to two-dimensional data for a cell 10 of cells of a given size. Any graphics data can be linked to the cell by means of the proportional conversion of X and Y.

(2) Line segments and the features such as points where lines end can be linked to each cell. Pointer information C specifying the storage area of the data necessary for graphics data retrieval are stored in cells. These cell data are set up by referring only once to the graphics data like showing of all graphics data on a graphics display. In addition, a great reduction is possible in the amount of cell data. In areas of the original with large amounts of data for lines, the numbers of cells required to describe them is small due to the compressing of the axes of the table. The reduction is in proportion to the product of the compression ratio of each axis.

(3) When cell data are compressed into a size several tenths that of the original, the graphics forms appearing in the same cell increase in number in proportion to the compression ratio and volume of data, which is a function of the complexity of the original. For the storage of such compressed information, each cell is made up of multiple blocks for storing the numerous pointers required for accessing the data representing the graphics forms.

(4) For retrieving the data information for any given point on the original, the corresponding cell can be located by using the same scale conversion as was used when establishing the cell data. Data for the graphics forms can then be retrieved quickly and directly from the pointer information stored in the cell. The number of candidates is likely to be one or a few, so the required graphics form can be readily distinguished by analyzing detailed information for each candidate. Since each cell of a table to store such pointers is composed of more than one block, the table as a whole is three dimensional. Therefore, we call it a quasi three-dimensional table.

In Figure 8, when there is too much data in a cell for the number of blocks DP, there is overflow to the auxiliary table 12A as in the parent invention of which this is a continuation in part.

To implement this method on the basis of the above ideas, it is necessary to decide on the size of the table and blocks and to deal with the amount of data.

Figure 9 shows the relation between the size of a table and the efficiency of graphics data retrieval. As the table size increases, the amount of compressed information in each cell decreases. This means that the number of detailed decisions, curve A, reduces when retrieving graphics data from pointers, adding to efficiency. On the other hand, there will be more cells to refer to in the case of retrieving graphics forms for any given point, curve B, thus impairing efficiency. Since each line segment is linked to more cells, it takes longer to create a table. As Figure 9 suggests, there is an optimum size for a table. But the size depends upon the type of data, type of processing, configuration of processing programs, etc. We compared the speeds of basic types of graphics processing such as checking the continuity of lines of the topographical data in Figure 10, using tables 64*64, 128*128, 256*256, and 512*512. There was a little decrease in efficiency using 64*64 in comparison with other tables, but no outstanding difference is seen among tables above that one. Aiming for better use of memory, the minimum table size that does not impair efficiency is preferable; for this example, 128*128.

If all the cells of the table are composed of the maximum number DP of blocks needed, all pointers C can be stored. But most of the blocks will be empty, resulting in reduced efficiency of memory use. Therefore, the number of blocks DP needs to be a suitable fixed number. As shown in Figure 8, memory is set aside as an auxiliary table for the case where corresponding graphics data are too many for the specified cell to store all the pointers. This auxiliary table 12A is of variable size and is for storing any pointers that overflow the cell storage. Overflowed cells have pointers that specify the storage area used for the pointer data in the auxiliary table 12A so that the table can be referred to. Here, the reduction of the size of blocks leads to an increase in data stored in the auxiliary tale. For the table, it is necessary to manipulate data with a variable number of pointers. This necessitates data movement or data packing while creating the table if the efficiency of memory use is to be maximized. The use of those processes can be minimized if some reduction of efficiency of memory use is allowed, but they cannot be avoided altogether. During retrieval, the search for pointers is performed in two steps and leads to a reduction in processing efficiency. For all the reasons above, it is necessary to optimize the size of blocks against processing speed and efficiency of memory use.

The number of pointers to be stored in an auxiliary table 12A is measured. Figure 10 shows the change in the total number of the overflow pointers when the size of blocks is varied. It can be concluded from the measuring that a block size of 4 or 5 is preferable for a table of size 128∗128. In this case, the number of pointers stored in the auxiliary table is not more than 10 percent of the total number of pointers with as little as a few percent reduction in retrieval efficiency.

When there is an alteration of graphics data, it is possible to re-create the entire table in a short time. Partial corrections, like addition and deletion, are possible in the table because the contents are independent. When a new graphics form is entered, it is necessary to only add pointers for the figure. If a figure is deleted, the appropriate data in a cell have only to be deleted after finding the cell. If the order of registration of the original data is greatly changed, it is sometimes advisable to re-create the whole table, but usually a partial update is more efficient.

Further improvement of processing efficiency is possible by reducing the number of pointers stored in the auxiliary table; this enables avoiding additional operation. Moreover, increased efficiency of memory use is possible by reducing the number of empty blocks, according to the invention of Figures 1-7.

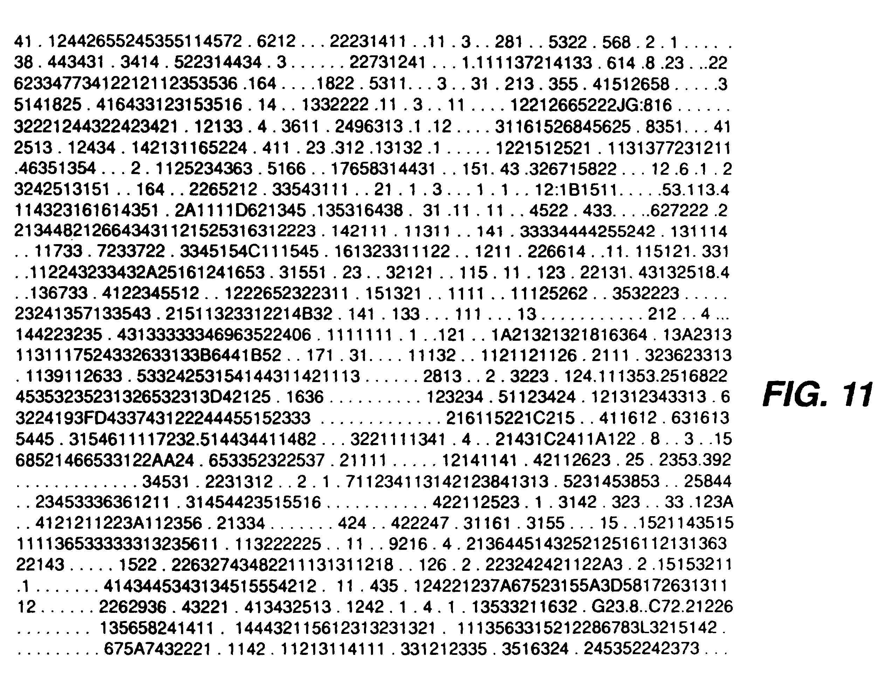

Figure 11 shows an example of a measurement of the number of pointers to be stored. The result shows that overflowed cells are not concentrated on any particular area, and are surrounded in most cases by cells with additional capacity. Therefore, it is more effective to store pointers from overflowed cells in the surrounding cells rather than an auxiliary table.

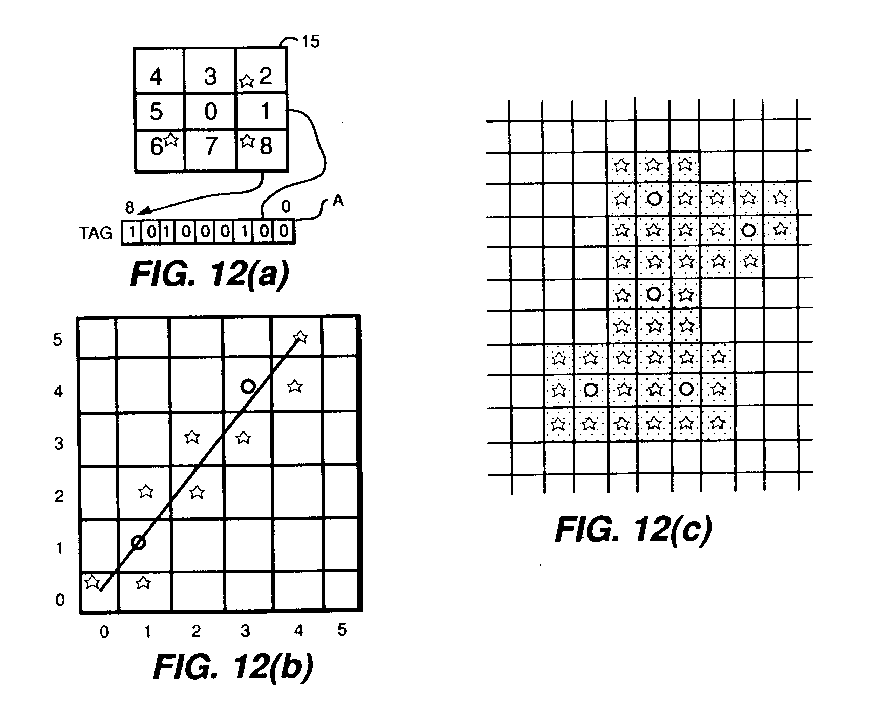

Each pointer of each cell has a tag for specifying which of the surrounding cells are sharing its data. Figure 12(a) shows the 8 neighboring cells considered along with the pertinent cell of interest. A 9-bit tag is used to link a pointer belonging to the pertinent cell under consideration to some of the surrounding 8 cells (for storage).

The cell to which pointer should belong can be specified by assigning '1' in the tag of the pointer to the corresponding bit. Once the center cell is located by applying the reduction ratio to the coordinates in the original, surrounding cells are identified and their pointers linked with a tag of the pointer. If the cell to which the pointer should belong has overflowed, empty blocks are searched for in the surrounding cells and are used for storing the pointers, and '1' is assigned to the corresponding bit of the tag of the pointer to indicate its "correct" location. If all the surrounding cells in turn have overflowed, the pointers are placed in an auxiliary table.

This method levels the distribution of pointers to be stored. Besides the method has the effect of containing almost all the pointers in a set of 9 cells, which prevents most overflows.

If the center cell and the surrounding 8 neighbors with 4 blocks each, are considered together, a maximum of 36 pointers can be stored. Considering that the surrounding cells have their own pointers to store, about 10 blocks each will typically seem available for storing pointers, although this will depend on the type and volume data.

Especially in the case of storing pointers for segments of a straight line, only center cells appearing along the line at intervals are used to store a pointer with a tag identifying surrounding cells with the same pointer as shown in Fig. 12(b).

In the example shown in Figure 12(b), the pointer is stored only in (1,1) and (4,3). The cells indicated by stars, (0,0),...(2,2), and (3,2),...(5,4), do not have pointers for the line; instead they are linked to the pointers of (1,1) and (4,3), respectively, by their tags. For straight lines this helps to reduce the number of pointers to be stored by 50 to 70 percent. The method is effective especially for pointers representing polygon information. In Figure 12(c), it is possible to cut down the number of pointers by a maximum of 90 percent.

If the basic approach of Figure 8 is used, with 4 blocks for each cell, it may not be possible to store all the pointers required for the data of a specific drawing, and auxiliary storage 12A would be required. However, if the extended method of Figures 1-7 using tags is employed, it becomes possible to store almost all the required pointers, even if each cell has only 2 blocks.

The space needed for storing one pointer is about 4 bytes after compression, though this is dependent on the type of computer and program. However, a tag covering a block of 9 neighboring cells needs 9 bits, so that in the extended method of Figures 1-7, 5 bytes are necessary for storing one pointer and tag. But since the block size of a table and memory for an auxiliary table are reduced, it is possible to cut down memory requirements by about 50 percent. This method also makes use of memory more efficiently, since the amount of memory for cells is reduced.

The method is effective especially for such tasks as clarifying vague or broken lines and intersection, and identifying areas. The method has been found successful in performing such work 30 to 50 times faster than conventional high-speed programs. This speed is several hundreds of times higher than programs employing only a "round robin" algorithm and no means for increasing the speed.

We applied the method (without tags) to a topographical analysis using map data. We found that when the table size was 128∗128, 80 % of cells had no more than 4 pointers, so we made each cell with 4 blocks. For graphics retrieval, using a 32 bit microcomputer equivalent to a personal computer using MS-DOS, on a real time basis we achieved a processing speed more than 40 times faster than by other methods such as based on area partition. Similar results were achieved using the extended method as expected.

The present method achieved high-speed retrieval tens of times faster than conventional methods. When it was applied to various design drawings and maps, the efficiency was proved to be almost unchanged even when the size of the table was fixed, as long as there was no sudden increase in the concentration of lines, though the optimal size of the table varied slightly with the complexity of the drawing.

In general the dimension of a table is no larger than that of the original.

By this method, it is possible to analyze topographical information with a personal computer on a real time basis. Usually, such an analysis would need a long time for calculation. It is also possible to conduct topographical analysis using contour lines, to produce a bird's eye view of a DTM to retrieve large-scale attribute data at a high speed, and to analyze road and piping networks, all on a real time basis.

Since this method can be applied not only to handling attribute data such as topographical descriptions, but also to retrieving three-dimensional graphical data, it is possible to extend the method to processing three- and four-dimensional topographical information which requires manipulating vast amounts of data.

In this manner, the present invention is capable of multifarious amplifications, and the graphic data storing method is extensively feasible.

According to the present invention, empty memory areas assigned to other cells are indirectly used, whereby an address data table can be efficiently utilized.

**Claims**

1. A graphic data handling method, comprising steps of

   dividing a graphic image of figures into a plurality of graphic cells;
   providing a graphic data table (12) storing, in random order independent of the position of the cells relative to the graphic image, graphic data for defining the figures within the cells; and
   providing an address data table (11) which includes a plurality of memory spaces of fixed capacity respectively assigned to the cells;

   characterized in that said step of providing an address data table (11) includes the steps of

   normally storing therein memory address pointers to the graphic data table that correspond to the figures in the cells, respectively; and
   when the memory address pointers for the graphic data that corresponds to the figures in a pertinent cell cannot be stored in the memory space assigned to the pertinent cell, substitutionally storing at least some of the memory address pointers for the pertinent cell in the memory space assigned to another of the cells.

2. The method of claim 1, further including a step of storing information indicative of the step of substitutional storing in the memory space of the pertinent cell of the address data table (11).

**3.** The method of claims 1 or 2, wherein said step of providing an address data table (11) comprises the step of providing the memory spaces corresponding to the cells in a computer memory sequentially in a fixed order dependent upon the positions of the cells in the graphic image.

**4.** The method of any of claims 1 to 3, further including a step of retrieving graphic data from the graphic data table (12) by:

defining an area that is only a part of the graphic image;

transposing the area into a representation of the cells within the area;

searching the memory spaces of the address data table corresponding to the cells of the area and memory spaces having substitutional storing of address pointers of the area, without searching the memory spaces corresponding to the remaining cells of the graphic image and determining address pointers therein assignable to the area; and

fetching from computer memory the graphic data in the graphic data table (12) using only the pointers found in said searching.

**5.** The method of claim 4, further including steps of

determining, from the information indicative of the substitutional storing found in said step of searching, substitutional storage in other cells that contain address pointers relating to the cells of the area and retrieving the related address pointers; and

fetching from computer memory the graphic data from the graphic data table in accordance with the retrieved related address pointers.

**6.** The method of any of claims 1 to 5, further including a step of setting at least one coded number for each memory space of the address data table to indicate which ones of the another cells are substitutionally storing the address pointers for the pertinent cell.

**7.** The method of any of claims 1 to 6, wherein the another cells have a fixed physical location in the graphic image relative to the pertinent cell.

**8.** The method of any of claims 1 to 7, further including a step of storing, with respect to each address pointer in the address data table (11), a data field indicating the type of figures of graphic data pointed to by the address pointer.

**9.** The method of any of claims 1 to 8, wherein said step of providing an address data table (11) includes a step of storing a data field including a single bit for each address pointer indicating whether the address pointer is an address pointer for the pertinent cell.

**10.** The method of any of claims 1 to 9, further including a step of storing a plurality of bits corresponding in number to the another cells having a specific physical relationship with the pertinent cell that is the same for each cell of the graphic image, and setting the bits to indicate which ones of the another cells contain address pointers for the graphic data of the pertinent cell.

**11.** The method of any of claims 1 to 10, performed completely by a computer system having a graphic data storage program (306), a graphic data searching program (307), a memory (305) containing the address data table, a memory(304) containing the graphic data table, an input device (308) for inputting the graphic image, and a data output device for outputting searching program results.

**12.** The method of any of claims 1 to 11, further including a step of providing an attribute information data table (13) separate from said graphic data tablet (12) for indicating attributes of figures within each cell, wherein said step of providing an address data table (11) provides address pointers in the address data table for addresses of attribute information in the attribute information data table correlated to the cells in the same manner that the graphic data in the graphic data table is correlated to the cells, and wherein each pointer in the address data table includes a field indicating whether the pointer relates to the graphic data table or the attribute information data table.

**13.** The method of any of claims 1 to 12, further including steps of computing the size of address data table space required for an input graphic image and dividing it into cell spaces;

determining if all graphic data items of the image have been processed, if they have, ending the storage program and if they have not, determining if all address pointers for the graphic image have been processed;

if all address pointers have not been processed, identifying a cell from coordinates of points in the graphic image, computing an address pointer of the cell, finding an empty space within the address data table, and storing the address pointer in the empty space of the address table according to the steps of forming an address table; and

thereafter returning to the determination if all address pointers of the graphic image have been processed.

**14.** The method of claim 3, further including a step of determining the address of an another cell within the address data table (11) by the address of the pertinent cell within the address data table and a fixed number unique to the physical location of the another cell relative to the pertinent cell in the graphic image, which is the same for the same physical relationship between any cell as a pertinent cell and it's another cells within the graphic image.

**15.** The method of claim 7 or 14, wherein the fixed physical location for the another cells is based on the criteria of physically directly adjacent cells in the graphic image.

**16.** The method of any of claims 1 to 15, wherein said step of providing a graphic data table stores graphic data for the cells in random order independent of the position of the cells relative to the graphic image.

**17.** The method of any of claims 1 to 16, wherein the spaces are all of the same fixed capacity.

**18.** The method of any of claims 1 to 17, wherein the cells are all of equal size.

**19.** The method of any of claims 1 to 18 , wherein said step of providing a graphic data table stores graphic data for end points, for node points, and an intersection with the pertinent cell boundary for each line in or passing through the pertinent cell.

**20.** The method of claim 19, wherein said step of providing a graphic data table includes a step of storing therein selective intermediate points and attribute information concerning the figures of the graphic image within the pertinent cell, which figures include the lines.

**21.** A graphic data handling system to be operated by a computer system having a graphic data storage program (306), a graphic data searching program (307), a memory (305) containing an address data table (11), a memory (304) containing a graphic data table (12), an input device (308) for inputting a graphic image, and a data output device for outputting searching program results, comprising:

means for dividing the graphic image of figures into a plurality of graphic cells;
means for storing graphic data for defining the figures within the cells in a graphic data table (12) in random order independent of the position of the cells relative to the graphic image;
means for providing the address data table (11) which includes a plurality of memory spaces of fixed capacity respectively assigned to the cells; characterized in that said means for providing the address data table comprises means for normally storing therein memory address pointers to the graphic data table that correspond to the figures in the cells respectively; means for substitutionally storing at least some of the memory address pointers for the pertinent cell in the memory space assigned to another of the cells when the memory address pointers for the graphic data that corresponds to the figures in a pertinent cell cannot be stored in the memory space assigned to the pertinent cell; and
means for storing information indicative of the substitutional storing in the memory space of the pertinent cell of the address data table.

**22.** The system of claim 21, wherein said means for providing the address data table provides the memory spaces corresponding to the cells in a computer memory sequentially in a fixed order dependent upon the positions of the cells in the graphic image.

**23.** The system of claims 21 or 22, further including means for retrieving graphic data from the graphic data table (12) including means for transposing an area that is only a part of the graphic image into a representation of the cells within the area, means for searching the memory spaces of the address data table (11) corresponding to the cells of the area and memory spaces having substitutional storing of address pointers of the area, without searching the memory spaces corresponding to the remaining cells of the graphic image and determining address pointers therein assignable to the area and means for fetching from computer memory the graphic data in the graphic data table using only the pointers found by said means for searching.

**24.** The system of any of claims 21 to 23, further including means for storing a plurality of bits corresponding in number to the another cells having a specific physical relationship with the pertinent cell that is the same for each cell of the graphic image, and setting the bits to indicate which ones of the another cells contain address pointers for the graphic data of the pertinent cell.

**25.** The system of any of claims 21 to 24, furhter including means for determining the address of an another cell within the address data table (11) by the address of the pertinent cell within the address data table and a fixed number unique to the physical location of the another cell relative to the pertinent cell in the graphic image, which is the same for the same physical relationship between any cell as a pertinent cell and it's another cells within the graphic image.

**Patentansprüche**

1. Graphikdaten-Verwaltungsverfahren mit den Schritten:

   Aufteilen eines Graphikbildes von Figuren in eine Vielzahl von Graphikzellen;
   Vorsehen einer Graphikdatentabelle zum Speichern in zufälliger Reihenfolge, unabhängig von der Position der Zellen bezüglich des Graphikbildes, Graphikdaten, die die Figuren innerhalb der Zellen bestimmen; und
   Liefern einer Adressendatentabelle (11), die eine Vielzahl von Speicherplätzen mit einer festgelegten Kapazität, die jeweils den Zellen zugewiesen sind, aufweist;

   dadurch **gekennzeichnet,** daß der Schritt Vorsehen einer Adressendatentabelle (11) die Schritte

   Speichern üblicherweise in der Adressendatentabelle die Speicheradressenzeiger für die Graphikdatentabelle, die jeweils zu den Figuren in den Zellen gehören; und,
   wenn die Speicheradressenzeiger für die Graphikdaten, die zu den Figuren in einer relevanten Zelle gehören, nicht im Speicherplatz, der der relevanten Zelle zugeordnet ist, gespeichert werden können, ersatzweise Speichern wenigstens einiger der Speicheradressenzeiger für die relevante Zelle in dem Speicherplatz, der einer anderen Zelle zugewiesen ist.

2. Verfahren nach Anspruch 1, weiter umfassend einen Schritt Speichern von Information, die den Schritt ersatzweise Speichern in dem Speicherplatz der relevanten Zelle der Adressendatentabelle (11) anzeigt.

3. Verfahren gemäß Anspruch 1 oder 2, wobei der Schritt Vorsehen einer Adressendatentabelle (11) die Schritte Vorsehen von Speicherplätzen, die den Zellen im Computerspeicher entsprechen, sequentiell in einer festgelegten Reihenfolge, abhängig von der Position der Zelle in dem Graphikbild beinhaltet.

4. Verfahren gemäß einem der Ansprüche 1 bis 3, weiter aufweisend einen Schritt Bereitstellen von Graphikdaten aus der Graphikdatentabelle (12) durch

   Festlegen eines Bereiches, der nur ein Teil des Graphikbildes ist;
   Transponieren des Bereiches in eine Darstellung der Zellen innerhalb des Bereiches;
   Suchen der Speicherplätze der Adressendatentabelle, die den Zellen des Bereiches entsprechen, und der Speicherplätze, die ersatzweise die Adressenzeiger des Bereiches speichern, ohne die Speicherplätze, die zu den verbleibenden Zellen des Graphikbildes gehören und Adressenzeiger festlegen, die den Bereich zugeordnet werden könnten, zu suchen; und
   Ausgeben der Graphikdaten in der Graphikdatentabelle (12) aus dem Computerspeicher nur unter Verwendung der durch die Suche aufgefundenen Zeiger.

5. Verfahren gemäß Anspruch 4, weiter aufweisend die Schritte:

   Bestimmen aus der Information, die ein ersatzweises Speichern anzeigt und in dem Suchschritt aufgefunden wurde, Ersatzspeicher in anderen Zellen, die Adressenzeiger enthalten, die die Zellen des Bereiches betreffen und Bereitstellen der dazugehörigen Adressenzeiger; und
   Abrufen der Graphikdaten aus der Graphikdatentabelle aus dem Computerspeicher in Übereinstimmung mit den bereitgestellten betreffenden Adressenzeigern.

6. Verfahren gemäß einem der Ansprüche 1 bis 5, weiter aufweisend einen Schritt Festlegen wenigstens einer kodierten Zahl für jeden Speicherplatz der Adressendatentabelle, um anzuzeigen, welche der anderen Zellen ersatzweise die Adressenzeiger der relevanten Zelle speichern.

7. Verfahren gemäß einem der Ansprüche 1 bis 6, wobei die anderen Zellen eine festgelegte physikalische Position im Graphikbild in bezug auf die relevante Zelle haben.

8. Verfahren gemäß einem der Ansprüche 1 bis 7, weiter aufweisend einen Schritt Speichern in bezug auf jeden Adressenzeiger in der Adressendatentabelle (11), ein Datenfeld, das den Typ der Figuren der Graphikdaten, auf die durch den Adressenzeiger gezeigt wird, anzeigt.

9. Verfahren gemäß einem der Ansprüche 1 bis 8, wobei der Schritt Vorsehen einer Adressendatentabelle (11) einen Schritt Speichern eines Datenfeldes mit einem einzigen Bit für jeden Adressenzeiger, das anzeigt, ob der Adressenzeiger ein Adressenzeiger für die relevante Zelle ist.

10. Verfahren gemäß einem der Ansprüche 1 bis 9, weiter aufweisend einen Schritt Speichern einer Vielzahl von Bits, die der Anzahl der anderen Zellen entsprechen, die eine bestimmte physikalische Beziehung zu der relevanten Zelle haben, die für jede Zelle des Graphikbildes dieselbe ist, und Festlegen der Bits, um anzuzeigen, welche der anderen Zellen Adressenzeiger für Graphikdaten der relevanten Zelle enthalten.

11. Verfahren gemäß einem der Ansprüche 1 bis 10, vollständig ausgeführt durch ein Computersystem mit einem Graphikdatenspeicherprogramm (306), einem Graphikdatensuchprogramm (307), einem Speicher (305), der die Adressendatentabelle enthält, einem Speicher (304), der die Graphikdatentabelle enthält, einer Eingabeeinrichtung (308) zum Eingeben des Graphikbildes und einer Datenausgabeeinrichtung zum Ausgeben der Suchprogrammergebnisse.

12. Verfahren gemäß einem der Ansprüche 1 bis 11, weiter aufweisend einen Schritt Liefern einer Attribut-Information-Datentabelle (13), getrennt von der Graphikdatentabelle (12) zum Anzeigen von Figurattributen innerhalb jeder Zellen, wobei der Schritt Vorsehen einer Adressendatentabelle (11) Adressenzeiger in der Adressendatentabelle zum Adressieren der Attribut-Information in der Attribut-Information-Datentabelle, die mit den Zellen auf dieselbe Weise korreliert sind, wie die Graphikdaten in der Graphikdaten-Tabelle mit den Zellen korreliert sind, liefert, und wobei jeder Zeiger in der Adressendatentabelle ein Feld enthält, das anzeigt, ob der Zeiger die Graphikdatentabelle oder die Attribut-Information-Datentabelle betrifft.

13. Verfahren gemäß einem der Ansprüche 1 bis 12, weiter aufweisend die Schritte:

Berechnen der Größe des Adressendaten-Tabellenplatzes, der für ein eingegebenes Graphikbild erforderlich ist und Unterteilen dieses Platzes in Zellenplätze;
Bestimmen, ob alle Graphikdatenelemente des Bildes verarbeitet worden sind, wenn diese der Fall ist, ob das Speicherprogramm beendet ist und, wenn dies nicht der Fall ist, ob alle Adressenzeiger des Graphikbildes verarbeitet worden sind;
wenn alle Adressenzeiger nicht verarbeitet worden sind, Identifizieren einer Zelle aus den Koordinaten der Punkte in dem Graphikbild, Berechnen eines Adressenzeigers der Zelle, Auffinden eines leeren Platzes innerhalb der Adressendatentabelle und Speichern des Adressenzeigers in dem leeren Platz der Adressendatentabelle gemäß den Schritten zum Bilden einer Adressentabelle; und
danach Zurückkehren zur Bestimmung, ob alle Adressenzeiger des Graphikbildes verarbeitet worden sind.

14. Verfahren gemäß Anspruch 3, weiter aufweisend einen Schritt Bestimmen der Adresse einer anderen Zelle innerhalb der Adressendatentabelle (11) durch die Adresse der relevanten Zelle innerhalb der Adressendatentabelle und Bestimmen einer Zahl, die eindeutig für die physikalische Position der anderen Zelle in bezug auf die relevante Zelle im Graphikbild ist, die dieselbe für dieselbe physikalische Beziehung zwischen irgendeiner Zelle als relevanten Zelle und ihren zugehörigen anderen Zellen innerhalb de Graphikbildes ist.

15. Verfahren gemäß einem der Ansprüche 7 bis 14, wobei die bestimmte physikalische Position der anderen Zellen auf den Kriterien der physikalisch direkt benachbarten Zellen im Graphikbild basiert.

16. Verfahren gemäß einem der Ansprüche 1 bis 15, wobei der Schritt Liefern einer Graphikdatentabelle Graphikdaten für die Zellen in Zufallsreihenfolge, unabhängig von der Position der Zellen in bezug auf das Graphikbild, speichert.

17. Verfahren gemäß einem der Ansprüche 1 bis 16, wobei die Speicherplätze alle die gleiche bestimmte Kapazität aufweisen.

18. Verfahren gemäß einem der Ansprüche 1 bis 17, wobei alle Zellen die gleiche Größe aufweisen.

19. Verfahren gemäß einem der Ansprüche 1 bis 18, wobei der Schritt Liefern einer Graphikdatentabelle Graphikdaten für Endpunkte, Knotenpunkte und Überschneidungen der relevanten Zellengrenzen für jede Linie in oder durch die relevante Zelle speichert.

20. Verfahren gemäß Anspruch 19, wobei der Schritt Liefern einer Graphikdatentabelle einen Schritt Speichern ausgewählter Zwischenpunkte und Attribut-Information, betreffend die Figuren des Graphikbildes innerhalb der relevanten Zelle, wobei die Figuren Linien enthalten.

21. Graphikdatenverwaltungssystem zum Betreiben durch ein Computersystem mit einem Graphikdatenspeicherprogramm (306), einem Graphikdatensuchprogramm (307), einem Speicher (305), der eine Adressendatentabelle (11) enthält, einem Speicher (304), der eine Graphikdatentabelle (12) enthält, eine Eingabeeinrichtung (308) zum Eingeben eines Graphikbildes und eine Datenausgabeeinrichtung zum Ausgeben der Suchprogrammergebnisse, mit

einer Einrichtung zum Unterteilen des Graphikbildes von Figuren in eine Vielzahl von Graphikzellen;

einer Einrichtung zum Speichern von Graphikdaten zum Festlegen der Figuren innerhalb der Zellen in einer Graphikdatentabelle (12) in zufälliger Reihenfolge, unabhängig von der Position der Zellen, bezüglich des Graphikbildes;

einer Einrichtung zum Liefern der Adressendatentabelle (11), die eine Vielzahl von Speicherplätzen mit vorbestimmter Kapazität, die jeweils den Zellen zugeordnet sind, aufweist;

dadurch **gekennzeichnet,** daß die Einrichtung zum Liefern der Adressendatentabelle

eine Einrichtung zum Speichern üblicherweise der Speicheradressenzeiger der Graphikdatentabelle, die jeweils zu den Figuren in den Zellen gehören, in der Adressendatentabelle;

eine Einrichtung zum ersatzweisen Speichern wenigstens einer der Speicheradressenzeiger der relevanten Zelle in dem Speicherplatz, der einer anderen Zelle zugeordnet ist, wenn die Speicheradressenzeiger der Graphikdaten, die den Figuren in einer relevanten Zelle entsprechen, nicht in dem Speicherplatz, der der relevanten Zelle zugeordnet ist, gespeichert werden können; und

eine Einrichtung zum Speichern von Information, die das ersatzweise Speichern in dem Speicherplatz der relevanten Zelle der Adressendatentabelle anzeigt,

aufweist.

22. System gemäß Anspruch 21, wobei die Einrichtung zum Liefern der Adressendatentabelle Speicherplätze, die den Zellen in einem Computerspeicher entsprechen, sequentiell in einer festgelegten Reihenfolge, abhängig von den Positionen der Zellen im Graphikbild, liefert.

23. System gemäß Anspruch 21 oder 22, weiter aufweisend eine Einrichtung zum Auffinden von Graphikdaten aus der Graphikdatentabelle (12), die eine Einrichtung zum Transponieren eines Bereiches, der nur einen Teil des Graphikbildes entspricht, in eine Darstellung der Zellen innerhalb des Bereiches, eine Einrichtung zum Suchen der Speicherplätze der Adressendatentabelle (11), die den Zellen des Bereiches entsprechen und Speicherplätzen, in denen ersatzweise die Adressenzeiger des Bereiches gespeichert sind, ohne Speicherplätze, die den verbleibenden Zellen des Graphiksbildes entsprechen und Adressenspeicher bestimmen, die dem Bereich zugeordnet werden können, zu suchen, und eine Einrichtung zum Ausgeben der Graphikdatentabelle aus dem Computerspeicher nur unter Verwendung der Zeiger, die durch die Sucheinrichtung aufgefunden worden sind, aufweist.

24. System gemäß einem der Ansprüche 21 bis 23, weiter aufweisend eine Einrichtung zum Speichern einer Vielzahl von Bits, die in ihrer Zahl den anderen Zellen mit einer bestimmten physikalischen Beziehung zur relevanten Zelle, die dieselbe ist für jede Zelle des Graphikbildes, entsprechen, und Festlegen der Bits, um anzuzeigen, welche der anderen Zellen Adressenzeiger für die Graphikdaten der relevanten Zelle enthalten.

25. System gemäß einem der Ansprüche 21 bis 24, weiter aufweisend eine Einrichtung zum Bestimmen der Adresse einer anderen Zelle innerhalb der Adressendatentabelle (11) durch die Adresse der relevanten Zelle innerhalb der Adressendatentabelle und einer bestimmten Zahl, die eindeutig die physikalischen Position der anderen Zelle in bezug auf die relevante Zelle im Graphikbild bestimmt, die dieselbe für dieselbe physikalische Beziehung zwischen irgendeiner Zelle als relevante Zelle und den anderen Zellen innerhalb des Graphikbildes ist.

**Revendications**

1. Procédé de gestion de données graphiques, comportant les étapes consistant à

diviser une image graphique constituée de figures en une pluralité de cellules graphiques ; fournir une table de données graphiques (12) mémorisant, dans un ordre aléatoire indépendant de la position des cellules par rapport à l'image graphique, les données graphiques destinées à définir les figures au sein des cellules ; et

fournir une table de données d'adresses (11) qui comporte une pluralité d'espaces-mémoires de capacité fixée, assignés respectivement aux cellules ;

caractérisé en ce que ladite étape consistant à fournir une table de données d'adresses (11) comporte les étapes consistant à

mémoriser normalement dans celle-ci des pointeurs d'adresses-mémoires relatifs à la table de données graphiques, qui correspondent aux figures contenues dans les cellules, respectivement et

lorsque les pointeurs d'adresses-mémoires associés aux données graphiques qui correspondent aux figures contenues dans une cellule pertinente ne peuvent être mémorisés dans l'espace-mémoire assigné à la cellule pertinente, mémoriser d'une manière substitutive au moins certains des pointeurs d'adresses-mémoires correspondant à la cellule pertinente dans l'espace-mémoire assigné à une autre des cellules.

2. Procédé selon la revendication 1, comportant en outre une étape consistant à mémoriser des informations indicatives de l'étape de mémorisation substitutive dans l'espace-mémoire de la cellule pertinente de la table de données d'adresses (11).

3. Procédé selon la revendication 1 ou 2, dans lequel ladite étape consistant à fournir une table de données d'adresses (11) comporte l'étape consistant à fournir les espaces-mémoires correspondant aux cellules dans une mémoire informatique, séquentiellement, dans un ordre fixé dépendant des positions des cellules dans l'image graphique.

4. Procédé selon l'une quelconque des revendications 1 à 3, comportant en outre une étape consistant à récupérer des données graphiques dans la table de données graphiques (11) en :

définissant une zone qui ne constitue qu'une partie de l'image graphique ;
transposant la zone en une représentation des cellules au sein de la zone ;
effectuant une recherche dans les espaces-mémoires de la table de données d'adresses qui correspondent aux cellules de la zone et les espaces-mémoires dans lesquels ont été mémorisés d'une manière substitutive des pointeurs d'adresses de la zone, sans effectuer de recherche dans les espaces-mémoires qui correspondent aux cellules restantes de l'image graphique, et déterminer dans ceux-ci les pointeurs d'adresses assignables à la zone ; et
lisant dans la mémoire informatique les données graphiques de la table de données graphiques (12) en n'utilisant que les pointeurs trouvés au cours de ladite recherche.

5. Procédé selon la revendication 4, comportant en outre les étapes consistant à

déterminer, à partir des informations indicatives de la mémorisation substitutive trouvées au cours de ladite étape de recherche, qu'une mémorisation substitutive a été effectuée dans d'autres cellules qui contiennent des pointeurs d'adresses relatifs aux cellules de la zone considérée et récupérer les pointeurs d'adresses concernés ; et
lire dans la mémoire informatique les données graphiques contenues dans la table de données graphiques conformément aux pointeurs d'adresses concernés récupérés.

6. Procédé selon l'une quelconque des revendications 1 à 5, comportant en outre une étape consistant à définir au moins un nombre codé pour chaque espace-mémoire de la table de données d'adresses afin d'indiquer dans lesquelles parmi les autres cellules ont été mémorisés d'une manière substitutive les pointeurs d'adresses associés à la cellule pertinente.

7. Procédé selon l'une quelconque des revendications 1 à 6, dans lequel les autres cellules ont un emplacement physique fixé dans l'image graphique par rapport à la cellule pertinente.

8. Procédé selon l'une quelconque des revendications 1 à 7, comportant en outre une étape consistant à mémoriser, par rapport à chaque pointeur d'adresse de la table de données d'adresses (11), un champ de données indiquant le type de figures que représentent les données graphiques sur lesquelles pointe le pointeur d'adresse.

9. Procédé selon l'une quelconque des revendications 1 à 8, dans lequel ladite étape consistant à fournir une table de données d'adresses (11) comporte une étape consistant à mémoriser un champ de données contenant un bit unique pour chaque pointeur d'adresse indiquant si le pointeur d'adresse est un pointeur d'adresse associé à la cellule pertinente.

10. Procédé selon l'une quelconque des revendications 1 à 9, comportant en outre une étape consistant à mémoriser une pluralité de bits correspondant en nombre aux autres cellules qui ont une relation physique spécifique avec la cellule pertinente, nombre qui est le même pour chaque cellule de l'image graphique, et à établir les bits afin d'indiquer lesquelles parmi les autres cellules contiennent des pointeurs d'adresses associés aux données graphiques de la cellule pertinente.

11. Procédé selon l'une quelconque des revendications 1 à 10, implémenté complètement par un système informatique comportant un programme de mémorisation de données graphiques (306), un programme de recherche de données graphiques (307), une mémoire (305) contenant la table de données d'adresses, une mémoire (304) contenant la table de données graphiques, un dispositif d'entrée (308) pour entrer l'image graphique, et un dispositif de sortie de données pour délivrer en sortie les résultats du programme de recherche.

12. Procédé selon l'une quelconque des revendications 1 à 11, comportant en outre une étape consistant à fournir une table de données d'informations d'attributs (13) séparée de ladite table de données graphiques (12) pour indiquer les attributs des figures contenues dans chaque cellule, dans lequel ladite étape consistant à fournir une table de données d'adresses (11) fournit des pointeurs d'adresses, dans la table de données d'adresses, qui sont associés aux adresses des informations d'attributs contenues dans la table de données d'informations d'attributs et sont corrélés aux cellules de la même manière que les données graphiques contenues dans la table de données graphiques sont corrélées aux cellules, et dans lequel chaque pointeur, dans la table de données d'adresses, comporte un champ indiquant si le pointeur concerne la table de données graphiques ou la table de données d'informations d'attributs.

13. Procédé selon l'une quelconque des revendications 1 à 12, comportant en outre les étapes consistant à calculer la taille de l'espace à allouer à la table de données d'adresses pour une image graphique entrée et à le diviser en espaces-cellules ;

déterminer si tous les éléments des données graphiques de l'image ont été traités, s'ils l'ont été, clore le programme de mémorisation, et s'ils ne l'ont pas été, déterminer si tous les pointeurs d'adresses associés à l'image graphique ont été traités ;
si tous les pointeurs d'adresses n'ont pas été traités, identifier une cellule à partir des coordonnées de points dans l'image graphique, calculer un pointeur d'adresse de la cellule, trouver un espace vacant à l'intérieur de la table de données d'adresses, et mémoriser le pointeur d'adresse dans l'espace vacant de la table d'adresses conformément aux étapes consistant à former une table d'adresses ; et
retourner ensuite à la détermination si tous les pointeurs d'adresses de l'image graphique ont été traités.

14. Procédé selon la revendication 3, comportant en outre une étape consistant à déterminer l'adresse d'une autre cellule au sein de la table de données d'adresses (11) via l'adresse de la cellule pertinente contenue dans la table de données d'adresses et un nombre fixé spécifique à l'emplacement physique de l'autre cellule par rapport à la cellule pertinente dans l'image graphique, qui est le même pour une même relation physique entre une cellule quelconque, prise comme cellule pertinente, et les autres cellules au sein de l'image graphique.

15. Procédé selon la revendication 7 ou 14, dans lequel l'emplacement physique fixé des autres cellules est basé sur le critère de cellules physiquement directement adjacentes dans l'image graphique.

16. Procédé selon l'une quelconque des revendications 1 à 15, dans lequel ladite étape consistant à fournir une table de données graphiques mémorise les données graphiques des cellules dans un ordre aléatoire indépendant de la position des cellules par rapport à l'image graphique.

17. Procédé selon l'une quelconque des revendications 1 à 16, dans lequel les espaces ont tous la même capacité fixée.

18. Procédé selon l'une quelconque des revendications 1 à 17, dans lequel les cellules ont toutes même taille.

19. Procédé selon l'une quelconque des revendications 1 à 18, dans lequel ladite étape consistant à fournir une table de données graphiques mémorise des données graphiques pour des points d'extrémité, des points nodaux, et une intersection avec la frontière de la cellule pertinente pour chaque ligne située dans la cellule pertinente ou traversant cette dernière.

20. Procédé selon la revendication 19, dans lequel ladite étape consistant à fournir une table de données graphiques comporte une étape consistant à mémoriser dans celle-ci des points intermédiaires sélectifs et des informations d'attributs concernant les figures de l'image graphique situées au sein de la cellule pertinente, lesquelles figures incluent les lignes.

21. Système de gestion de données graphiques à implémenter par un système informatique comportant un programme de mémorisation de données graphiques (306), un programme de recherche de données graphiques (307), une mémoire (305) contenant une table de données d'adresses (11), une mémoire (304) contenant une table de données graphiques (12), un dispositif d'entrée (308) pour entrer une image graphique, et un dispositif de sortie de données pour délivrer en sortie les résultats du programme de recherche, comportant :

des moyens pour diviser l'image graphique constituée de figures en une pluralité de cellules graphiques ;
des moyens pour mémoriser les données graphiques destinées à définir les figures au sein des cellules dans une table de données graphiques (12) dans un ordre aléatoire indépendant de la position des cellules par rapport à l'image graphique ;
des moyens pour fournir la table de données d'adresses, qui comportent une pluralité d'espaces-mémoires de capacité fixée, respectivement assignés aux cellules ; caractérisé en ce que lesdits moyens pour fournir la table de données d'adresses comportent

des moyens pour mémoriser normalement dans ceux-ci des pointeurs d'adresses-memoires relatifs à la table de données graphiques, qui correspondent aux figures contenues dans les cellules, respectivement ;

des moyens pour mémoriser d'une manière substitutive au moins certains des pointeurs d'adresses-mémoires correspondant à la cellule pertinente dans l'espace-mémoire assigné à une autre des cellules lorsque les pointeurs d'adresses-mémoires associés aux données graphiques qui correspondent aux figures contenues dans une cellule pertinente ne peuvent être mémorisés dans l'espace-mémoire assigné à la cellule pertinente ; et

des moyens pour mémoriser des informations indicatives de la mémorisation substitutive dans l'espace-mémoire de la cellule pertinente de la table de données d'adresses.

22. Système selon la revendication 21, dans lequel lesdits moyens pour fournir la table de données d'adresses fournissent les espaces-memoires correspondant aux cellules dans une mémoire informatique, séquentiellement, dans un ordre fixé dépendant des positions des cellules dans l'image graphique.

23. Système selon la revendication 21 ou 22, comportant en outre des moyens pour récupérer les données graphiques dans la table de données graphiques (12), comportant des moyens pour transposer une zone qui ne constitue qu'une partie de l'image graphique en une représentation des cellules au sein de la zone, des moyens pour effectuer une recherche dans les espaces-mémoires de la table de données d'adresses (11) qui correspondent aux cellules de la zone et les espaces-mémoires dans lesquels ont été mémorisés d'une manière substitutive les pointeurs d'adresses de la zone considérée, sans effectuer aucune recherche dans les espaces-mémoires qui correspondent aux cellules restantes de l'image graphique, et déterminer les pointeurs d'adresses assignables à la zone, et des moyens pour lire dans la mémoire informatique les données graphiques de la table de données graphiques en n'utilisant que les pointeurs trouvés par lesdits moyens de recherche.

24. Système selon l'une quelconque des revendications 21 à 23, comportant en outre des moyens pour mémoriser une pluralité de bits correspondant en nombre aux autres cellules qui ont une relation physique spécifique avec la cellule pertinente, nombre qui est le même pour chaque cellule de l'image graphique, et établir les bits afin d'indiquer lesquelles parmi les autres cellules contiennent des pointeurs d'adresses associés aux données graphiques de la cellule pertinente.

25. Système selon l'une quelconque des revendications 21 à 24, comportant en outre des moyens pour déterminer l'adresse d'une autre cellule au sein de la table de données d'adresses (11) via l'adresse de la cellule pertinente contenue dans la table de données d'adresses et un nombre fixé spécifique à l'emplacement physique de l'autre cellule par rapport à la cellule pertinente de l'image graphique, qui est le même pour une même relation physique entre une cellule quelconque, prise comme cellule pertinente, et les autres cellules contenues dans l'image graphique.

FIG. 1(a)

FIG. 1(b)

| | A | B | C | D | |
|---|---|---|---|---|---|
| X (I-1,J+1) 116 | | 1 | A D  P3 K | 3 | ← iv |
| X(I,J+1) | | 0 | A D  P3 K+1 | 3 | |
| | | 0 | A D  P2 J | 3 | |
| 117 | | 1 | A D  P2 J+1 | 3 | ← iii |
| X(I+1,J+1) 115 | | 1 | A D  P2 J | 3 | ← ii |
| | | 1 | A D  P3 K+1 | 2 | ← v |
| X(I-1,J) | | 0 | A D  P3 K | 3 | |
| 111 | | 0 | A D  Am | 5 | |
| X(I,J) 112 | | 0 | A D  P1 i+1 | 1 | |
| 113 X(I+1,J) | | 0 | A D  P1 i | 3 | |
| 114 | | 1 | A D  P2 J+1 | 2 | ← i |
| | | 0 | A D  P2 J+1 | 3 | |

## FIG. 1(c)

| | X |
|---|---|
| Am | Y |
| Cm | |
| Am+1 | X Y |
| Cm+1 | |

13

## FIG. 1(d)

15

| | I-1 | I | I+1 |
|---|---|---|---|
| J+1 | 5 | 4 | 3 |
| J | 6 | 1 | 2 |
| J-1 | 7 | 8 | 9 |

## FIG. 1(e)

| 9 | 8 | 7 | 6 | 5 | 4 | 3 | 2 |
|---|---|---|---|---|---|---|---|
| 0 | 0 | 0 | 0 | 1 | 0 | 1 | 1 |

A ——→                                                    ～16

## FIG. 1f

| 9 | 8 | 7 | 6 | 5 | 4 | 3 | 2 |
|---|---|---|---|---|---|---|---|
| 0 | 0 | 0 | 0 | 0 | 1 | 0 | 0 |

A ——→                                                    ～17

## FIG. 1g

COMPUTER ～301

303
304

| GRAPHIC DATA TABLE 12 |
| ATTRIBUTE INFORMATION DATA TABLE 13 ～302 |
| ADDRESS DATA TABLE ～305 |
| GRAPHIC DATA STORING PROGRAM AREA (FIG. 4) ～306 |
| GRAPHIC DATA SEARCHING PROGRAM AREA (FIG. 6) ～307 |

311

## FIG. 3

308

INPUT

309

DRAWING          TAPE ～310

**FIG. 2(a)**

(CENTER CELL (I, J))          (CENTER CELL (I + 1, J))

**FIG. 2(b)**

**FIG. 4(a)**

START

INITIALIZE ADDRESS DATA — 401

COMPUTE SIZE OF SPACE OCCUPIED BY FIGURE. — 402

HAS COMPUTATION BEEN EXECUTED FOR ALL GRAPHIC DATA ITEMS? — 403

Y → END

N

HAVE ALL END POINTS, NODE POINTS AND ATTRIBUTED INFORMATION ITEMS BEEN PROCESSED? — 404

Y → 1

N

OBTAIN CELL NO. FROM COORDINATES OF POINTS. — 405

COMPUTE ADDRESS FROM CELL NO. — 406

FIND EMPTY AREA OF ADDRESS DATA TABLE. — 407

STORE SUBSTITUTION DISCRIMINATOR, INCLUSION-EXCLUSION DISCRIMINATOR, ADDRESS DATA, AND FIGURE DISCRIMINATOR IN ADDRESS DATA TABLE. — 408

2

**FIG. 4(b)**

Flowchart:

1 (circle connector) →

409 ARE POINTS ON LINES TO BE REGISTERED?
- N → 2 (circle connector)
- Y ↓

410 HAVE ALL LINES CONSTITUTING FIGURE BEEN PROCESSED?
- Y → (to 2 connector)
- N ↓

411 OBTAIN INTERSECTION POINT BETWEEN BOUNDARY OF CELL AND EACH LINE.

412 OBTAIN CELL NO. FROM COORDINATES OF INTERSECTION POINT.

413 OBTAIN NO. OF CELL THROUGH WHICH LINE PASSES.

414 COMPUTE ADDRESS FROM CELL NO.

415 FIND EMPTY AREA OF ADDRESS DATA TABLE.

416 STORE SUBSTITUTION DISCRIMINATOR, INCLUSION-EXCLUSION DISCRIMINATOR, ADDRESS DATA TABLE.

FIG. 5(a)

FIG. 5(b)

FIG. 8

```
                    ┌─────────┐
                    │  START  │
                    └─────────┘
                         │
                         ▼
          ┌──────────────────────────────┐   601
          │    DESIGNATE COORDINATES      │
          └──────────────────────────────┘
                         │
                         ▼
            ┌──────────────────────┐   602
            │    SET SEEK WINDOW    │
            └──────────────────────┘
                         │
                         ▼
     ┌──────────────────────────────────────┐   603
     │ OBTAIN CELL NOS. FROM COORDINATES     │
     │      OF CORNERS OF RECTANGLE.         │
     └──────────────────────────────────────┘
                         │
                         ▼
          ┌──────────────────────────────┐   604
          │     OBTAIN NO. OF CELL        │
          │    OVERLAPPING RECTANGLE.     │
          └──────────────────────────────┘
                         │
                         ▼           605
                    ╱─────────────╲
                   ╱  HAVE ALL ADDRESS DATA  ╲        Y
        ◄─────────◄  ITEMS BEEN EXTRACTED?   ►───────┐
                   ╲                         ╱        │
                    ╲─────────────╱                   │
                         │ N                          │
                         ▼           606              │
          ┌──────────────────────────────┐           │
          │    COMPUTE ADDRESS FROM       │           │
          │          CELL NO.             │           │
          └──────────────────────────────┘           │
                         │                            │
                         ▼             607            │
     ┌──────────────────────────────────────┐        │
     │   AS TO ALL PERTINENT FIGURES,        │        │
     │   EXTRACT ADDRESS DATA ITEMS          │        │
     │   AND FIGURE DISCRIMINATORS FROM      │        │
     │   ADDRESS DATA TABLE.                 │        │
     └──────────────────────────────────────┘        │
                         │                            │
                         └──────────┐                 │
                                    ▼◄────────────────┘
          ┌──────────────────────────────┐   608
          │   OBTAIN LINE NEAREST         │
          │   DESIGNATED COORDINATES.     │
          └──────────────────────────────┘
                         │
                         ▼
                    ┌─────────┐
                    │   END   │
                    └─────────┘
```

**FIG. 6**

27

EP 0 443 531 B1

**FIG. 7(a)**

Pm$^i$  Lm  
Pa$^l$  
La  
Pm$^{i+1}$  
Ln  
Pn$^{i+1}$  
Pn$^j$

**FIG. 7(b)**

700

| | |
|---|---|
| AD•Pm$^i$ | 3 |
| AD•Pm$^{i+1}$ | 2 |
| AD•Pn$^i$ | 3 |
| ADR | 6 |

X(I,J)  71

| | |
|---|---|
| AD • Pn$^{i+1}$ | 2 |
| AD • Pn$^{i+1}$ | 3 |

72

**FIG. 7(c)**

710

| | |
|---|---|
| ADR | 6 |

73

| | |
|---|---|
| AD•Pm$^i$ | 3 |
| AD•Pm$^{i+1}$ | 2 |
| AD•Pn$^i$ | 3 |
| AD•Pn$^{i+1}$ | 2 |
| AD•Pn$^{i+1}$ | 3 |

74

X(I,J)

**FIG. 7(d)**

720

| | |
|---|---|
| AD•Pm$^i$ | 3 |
| AD•Pm$^{i+1}$ | 2 |
| AD•Pn$^i$ | 3 |
| ADR | 6 |

75

X(I,J)

| | |
|---|---|
| AD Pn$^{i+1}$ | 2 |
| AD Pn$^{i+1}$ | 3 |

| | |
|---|---|
| AD•Pn$^{i+1}$ | 2 |
| AD•Pn$^{i+1}$ | 3 |
| AD•Pn$^1$ | 3 |

76  81

ADDITIONAL DATA

**FIG. 7(e)**

730

| | |
|---|---|
| AD•Pm$^i$ | 3 |
| AD•Pm$^{i+1}$ | 2 |
| AD•Pn$^i$ | 3 |
| ADR1 | 6 |

77

X(I,J)

| | |
|---|---|
| AD•Pn$^{i+1}$ | 2 |
| AD•Pn$^{i+1}$ | 3 |
| ADR2 | 6 |

78  79

| | |
|---|---|
| AD • Pa$^l$ | 3 |

80

*FIG.9*

*FIG. 10*

41 . 124426552245355114572 . 6212 . . . 22231411 . .11 . 3 . . 281 . . 5322 . 568 . 2 . 1 . . . .
38 . 443431 . 3414 . 522314434 . 3 . . . . . . 22731241 . . . 1.111137214133 . 614 .8 .23 . . .22
62334773412212112353536 .164 . . . .1822 . 5311. . . 3 . . 31 . 213 . 355 . 41512658 . . . . .3
5141825 . 4164331231535160 . 14 . . 1332222 .11 . 3 . . 11 . . . . 12212665222JG:816 . . . . . .
32221244322423421 . 12133 . 4 . 3611 . 2496313 .1 .12 . . . . 31161526845625 . 8351. . . 41
2513 . 12434 . 142131165224 . 411 . 23 .312 .13132 .1 . . . . . 1221512521 . 1131377231211
.46351354 . . . 2 . 1125234363 . 5166 . . 17658314431 . . 151. 43 .326715822 . . . 12 .6 .1 . 2
3242513151 . . 164 . . 2265212 . 33543111 . . 21 . 1 . 3 . . . 1 . 1 . . 12:1B1511. . . . .53.113.4
114323161614351 . 2A1111D621345 .135316438 . 31 .11 . 11 . . 4522 . 433. . . . .627222 .2
21344821266434311215253163122 23 . 142111 . 11311 . . 141 . 33334444255242 . 131114
. . 11733 . 7233722 . 3345154C111545 . 161323311122 . . 1211 . 226614 . .11. 115121. 331
. .112243233432A25161241653 . 31551 . 23 . . 32121 . . 115 . 11 . 123 . 22131. 43132518.4
. .136733 . 4122345512 . . 1222652322311 . 151321 . . 1111 . . 11125262 . . 3532223 . . . . .
23241357133543 . 21511323312214B32 . 141 . 133 . . . 111 . . . 13 . . . . . . . . . . 212 . . 4 . . .
144223235 . 43133333346963522406 . 1111111 . 1 . .121 . . 1A21321321816364 . 13A2313
11311175243326331338641852 . . 171 . 31. . . . 11132 . . 1121121126 . 2111 . 323623313
. 1139112633 . 53324253154144311421113 . . . . . . 2813 . . 2 . 3223 . 124.111353.2516822
45353235231326532313D42125 . 1636 . . . . . . . . . 123234 . 51123424 . 121312343313 . 6
3224193FD433743122244455152333 . . . . . . . . . . . . 216115221C215 . . 411612 . 631613
5445 . 3154611117232.514434411482 . . . 3221111341 . 4 . . 21431C2411A122 . 8 . . 3 . .15
68521466533122AA24 . 653352322537 . 21111 . . . . . 12141141 . 42112623 . 25 . 2353.392
. . . . . . . . . . . .34531 . 2231312 . . 2 . 1 . 711234113142123841313 . 5231453853 . . 25844
. . 23453336361211 . 31454423515516 . . . . . . . . . . . 422112523 . 1 . 3142 . 323 . . . 33 .123A
. . 4121211223A112356 . 21334 . . . . . . . 424 . . 422247 . 31161 . 3155 . . . 15 . .1521143515
11113653333333313235611 . 113222225 . . 11 . . 9216 . 4 . 213644514325212516112131363
22143 . . . . . 1522 . 22632743482211131311218 . . 126 . 2 . 223242421122A3 . 2 .15153211
.1 . . . . . . 414344534313451555421 2 . 11 . 435 . 124221237A67523155A3D58172631311
12 . . . . . . 2262936 . 43221 . 413432513 . 1242 . 1 . 4 . 1 . 13533211632 . G23.8..C72.21226
. . . . . . . . 135658241411 . 144432115612313231321 . 1113563315212286783L3215142 .
. . . . . . . . .675A7432221 . 1142 . 11213114111 . 331212335 . 3516324 . 245352242373 . . .

FIG. 12(c)

FIG. 12(a)

FIG. 12(b)